# EUROPÄISCHE PATENTSCHRIFT

(11) **EP 2 978 957 B1**
(45) Veröffentlichungstag und Bekanntmachung des Hinweises auf die Patenterteilung: **17.06.2020**
(21) Anmeldenummer: 14701144.9
(22) Anmeldetag: 20.01.2014
(51) Int. Cl.: F02D 41/00, F02D 19/02, F02D 19/06, F02D 41/14, F02B 37/16

(54) **VERFAHREN UND VORRICHTUNG ZUM BETRIEB EINER BRENNKRAFTMASCHINE**
METHOD AND DEVICE FOR OPERATING AN INTERNAL COMBUSTION ENGINE
PROCEDE ET DISPOSITIF POUR FAIRE FONCTIONNER UN MOTEUR A COMBUSTION INTERNE

(30) Priorität: 28.03.2013 DE 102013205725
(43) Veröffentlichungstag der Anmeldung: 03.02.2016
(73) Patentinhaber: MTU Friedrichshafen GmbH, 88045 Friedrichshafen (DE)
(72) Erfinder: FLOHR, Andreas, 88693 Untersiggingen (DE); GELLER, Andreas, 89073 Ulm (DE); BERNHARD, Alexander, 88074 Meckenbeuren (DE)
(74) Vertreter: Eisenführ Speiser
(86) Internationale Anmeldenummer: PCT/EP2014/000140
(87) Internationale Veröffentlichungsnummer: WO 2014/154312

(56) Entgegenhaltungen:
- EP-A2- 1 398 490
- WO-A1-2012/143997
- US-A1- 2012 291 432
- US-B1- 6 273 076

## Beschreibung

Die Erfindung betrifft gemäß dem Oberbegriff des Anspruchs 1 ein Verfahren zum Betrieb einer Brennkraftmaschine, insbesondere einer Gas-Brennkraftmaschine, mit einer Ansaugstrecke und einem Motor mit einer Anzahl von Zylindern. Die Erfindung betrifft weiter eine Regelung für die Brennkraftmaschine nach dem Oberbegriff des Anspruchs 14 und eine Brennkraftmaschine nach dem Oberbegriff des Anspruchs 16. Die Brennkraftmaschine weist in der Ansaugstrecke eine Aufladung und einen Bypass zur Umgehung der Aufladung auf.

Es ist bekannt, bei Brennkraftmaschinen allgemein Drosselorgane zur Lastregelung einzusetzen. Brennkraftmaschinen werden in zunehmendem Masse, selbst bei nicht-mobilen Anwendungen, transienten --also in allgemeinster Weise nicht-stationären-- Betriebsweisen ausgesetzt, sodass der Lastregelung eine zunehmende Bedeutung zukommt.

Diese erweist sich insbesondere bei Gas-Brennkraftmaschinen als vergleichsweise komplex. Anwendungsfelder von Gas-Brennkraftmaschinen sind mobile Anwendungen --wie beispielsweise im Schifffahrtsbereich oder im Nutz- und Schwerkraftfahrzeugbereich-- als auch stationäre Anwendungen wie bei Blockkraftwerken, die insbesondere für eine schwankende Gasversorgung vorteilhaft auszulegen sind.

US 6,131,552 offenbart allgemein ein Brennstoffsteuersystem, welches die Zuführung von Gas zu einer Mischkammer in Abhängigkeit eines gemessenen Betriebszustandes des Motors regeln kann. Das Steuerverfahren der US 6,131,552 A oder andere nur lastabhängige Gasdosierungen erweisen sich auch bei komplexen Regelsystemen als unzureichend.

Üblicherweise ist ein Luftaufwand ein Maß für die einem Verbrennungsmotor zugeführte gasförmige Frischladung einer Ladeluft in einem Ladegemisch, wobei der Luftaufwand auch eine Aussage über die Qualität des Ansaugsystems und des Ansaugprozesses zulässt. Der tatsächliche Luftaufwand stellt regelmäßig das Verhältnis der tatsächlich dem Motor, bzw. einem Zylinder desselben, während eines Arbeitsspiels zugeführte Masse an Frischluft in einem Ladegemisch dar. Diese reale Gemischmasse wird bezogen auf die theoretische Frischladungsmasse, ermittelt aus dem geometrischem Hubvolumen und der theoretischen Ladungsdichte bei Umgebungszustand (bei frei ansaugenden Motoren) bzw. bei aufgeladenen Motoren wird hier der Zustand der Frischladung hinter dem Verdichter oder hinter dem Ladeluftkühler berücksichtigt.

Auf die einem Zylinder zugeführte Frischladung üben eine Reihe von Faktoren Einfluss aus, wie zum Beispiel die Ventilsteuerzeiten oder der Öffnungsquerschnitt der Ventile. Grundsätzlich kann diese aus einem Modul zur Bestimmung der Motoraufladung bestimmt werden, dem ein Ansaugstreckenmodell hinterlegt ist. Tatsächlich entspricht die dem Motor zugeführte Frischladung in einem Ladegemisch aber nur in Ausnahmefällen der theoretischen. Der Luftaufwand ist keine für einen Motor konstante Zahl, sondern ist in starkem Maße von der Drehzahl und den vorliegenden geometrischen Verhältnissen von Ansaugtrakt und Brennraum abhängig; zur Bewältigung dieser Abhängigkeit kann z. B. ein geeignetes Kennfeld Berücksichtigung finden.

Ansaugstreckenmodelle wiederum sind in Motorreglern grundsätzlich bei allgemeinen Brennkraftmaschinen, wie z. B. aus EP 1 398 490 A2 oder US 6.273.076B1, bekannt. Diesen ist gemeinsam, dass unter Modellierung der Ansaugstrecke --im einfachsten Fall als homogener Druckbehälter, um die dynamischen Vorgänge im Luftpfad zu erfassen-- als weit verbreitete Grundidee, das Speicherverhalten der Ansaugstrecke (auch als Saugrohr bezeichnet) über die Befüll- und Entleermethode modelliert wird. Dabei wird das Saugrohr als Druckbehälter behandelt, der durch eine Drosselklappe kontinuierlich mit Luft gefüllt wird und aus dem der Motor durch sein Saugverhalten entsprechend dem Arbeitstakt über das Einlassventil Luft abgesaugt.

Es zeigt sich jedoch, dass eine Brennstoffversorgung einer Gas-Brennkraftmaschine, insbesondere im transienten Betriebsbereich der Brennkraftmaschine und bei variablen Brennstoffqualitäten, noch sehr viel komplexer ist. Zudem zeigt sich bei Gas-Brennkraftmaschinen, insbesondere zur Ausbildung einer funkengezündete Gas-Brennkraftmaschine, dass allgemein eine Lastregelung, insbesondere der Betrieb im Niedriglastbereich und/oder im transienten Lastbereich problematisch sein kann. So kann es allgemein bei Brennkraftmaschinen, insbesondere aber bei Gas-Brennkraftmaschinen, bei Lastabwürfen und dem Schließen der Drosselklappen zu Verdichterpumpen kommen, wenn der Verdichter des Abgasturboladers durch eine schnelle Verringerung des durch ihn geförderten Gasmassenstroms kurzzeitig außerhalb seines Betriebsbereichs betrieben wird. Außerdem kann ein Lastaufschaltpotential eines Gasmotors sehr beschränkt sein, wenn diese im Stationärbetrieb geöffnet war.

Gleichzeitig besteht die Ansaugstrecke zwischen Verdichteraustritt und Brennraumeintritt aus teilweise großen Volumina, die dadurch signifikante Gemischmassen speichern oder abgeben. Dies gilt insbesondere dann, wenn es bei Last- und/oder Drehzahländerungen des Motors zu Druck und/oder Temperaturänderungen in den einzelnen Teilvolumina kommt. Als Folge einer aber nur bedingt auf den Betriebspunkt angepassten --weil insbesondere wegen der teilweise großen Volumina ungenauen-- Gemischmassenbildung bei einer Gas-Brennkraftmaschine sind hohe Kohlenwasserstoffemissionen (HC Emission) oder andere erhöhte Emissionen (NOx, CO, Partikel etc.) als auch schlechte Wirkungsgrade durch unverbranntes Brenngas zu erwarten.

Beim Betrieb von Gasmotoren findet die Gemischbildung üblicherweise vor dem Verdichter der Abgasturboaufladung statt; die vorliegende Problematik betrifft hinsichtlich des Gasmotors neben solchen mit zentraler Gemischbildung aber auch solche mit zylinderindividueller Gemischbildung.

Wünschenswert ist es, einen Betrieb einer Brennkraftmaschine, insbesondere einen Gas-Betrieb einer Gas-Brennkraftmaschine, insbesondere im transienten, vorzugsweise Niedriglastbereich, entsprechend der Lastanforderungen als auch Emissionsbedingungen vorteilhafter zu gestalten.

An dieser Stelle setzt die Erfindung an, deren Aufgabe es ist, ein Verfahren und eine Vorrichtung anzugeben, mittels der ein verbesserter Betrieb einer Brennkraftmaschine, insbesondere als eine Gas-Brennkraftmaschine, erreicht wird. Insbesondere ist es Aufgabe der Erfindung, eine verbesserte Lastregelung beim Betrieb zur Verfügung zu stellen. Insbesondere ist es Aufgabe der Erfindung, eine Verbesserung im transienten und/oder stationären Betrieb zu erreichen. Vorzugsweise sollten im transienten Betrieb Drehmomentsprünge eines Motors vermieden sein. Vorzugsweise soll im Rahmen eines verbesserten Betriebsverfahrens eine verbesserte Ansteuerung von Drosseln vorgesehen sein, insbesondere einer Motor-Drossel und/oder einer Verdichterbypass-Drossel; insbesondere soll auch bei sich verändernden Lastanforderungen eine Vermeidung von übermäßigen Emissionen erreicht werden.

Insbesondere sollte eine verbesserte transient und/oder stationär betreibbare Brennkraftmaschine, insbesondere als eine Gas-Brennkraftmaschine, zur Verfügung gestellt werden. Insbesondere soll ein Lastaufschaltvermögen --vorzugsweise ausgehend von einem stationären Betriebvorteilhafter gestaltet sein. Insbesondere soll ein Verdichterpumpen --vorzugsweise ausgehend von einem transienten Betrieb -- vermieden werden. Insbesondere soll weitgehend vermieden werden, dass ein Turbolader außerhalb seines ausgelegten Betriebsbereichs betrieben werden muss. Aufgabe der Erfindung ist es auch, wenigstens eines der oben beschriebenen Probleme zu adressieren. Zumindest soll eine alternative Lösung vorgeschlagen werden.

Die Aufgabe betreffend das Verfahren wird durch die Erfindung mit einem Verfahren gemäß dem Anspruch 1 gelöst.

Dabei wird ausgegangen von einem Verfahren der eingangs genannten Art zum Betrieb einer Brennkraftmaschine, mit
- einer Ansaugstrecke und einem Motor mit einer Anzahl von Zylindern und einem strömungsaufwärts vor den Zylindern angeordnetem Receiver, wobei
   die Ansaugstrecke aufweist:
   - eine Aufladung mit einem Verdichter und einen Bypass zur Umgehung der Aufladung, und wobei
- dem Receiver eine Motor-Drossel und dem Bypass eine Verdichterbypass-Drossel zugeordnet ist.

In dem Verfahren wird eine Stellung der Motor-Drossel und/oder der Verdichterbypass-Drossel betriebsabhängig eingestellt zur Beeinflussung eines Ladefluids.

Die Erfindung sieht vor, dass wenigstens ein Massenstrom und/oder Zustand des Ladefluids vor dem Motor bestimmt wird, indem der Ansaugstrecke ein Ansaugstreckenmodell zugeordnet wird, mittels dem wenigstens ein Massenstrom und/oder Zustand des Ladefluids vor dem Motor bestimmt wird.

Die Erfindung sieht vor, dass basierend auf einem Bestimmungsergebnis erfindungsgemäß die Verdichterbypass-Drossel in Abhängigkeit von der Motor-Drossel eingestellt wird.

Betreffend einer Anwendung bei einer Gas-Brennkraftmaschine wird entsprechend eine Beeinflussung eines Gemischanteils eines Gas-Luft-Gemisches vorgenommen unter betriebsabhängiger Einstellung der Motor-Drossel und/oder der Verdichterbypass-Drossel. Gemäß einer Weiterbildung wird betreffend den ersten Aspekt bei dem Verfahren der

Ansaugstrecke ein Ansaugstreckenmodell zugeordnet, mittels dem wenigstens ein Gemisch-Massenstrom und/oder ein Gemisch-Zustand des Gemischanteils bestimmt wird. Gemäß der Erfindung wird bei dem Verfahren, basierend auf einem Bestimmungsergebnis, die Verdichterbypass-Drossel in Abhängigkeit von der Motor-Drossel eingestellt.

Vorzugsweise erfolgt die Umsetzung des ersten und/oder zweiten Aspekts im Rahmen einer Steuer- und/oder Regelabhängigkeit.

Mit Vorteil sieht ein Ansaugstreckenmodell die Simulierung einer Ansaugstrecke im Rahmen einer Regelung der Brennkraftmaschine, insbesondere Gas-Brennkraftmaschine, vor. Zwar sind Ansaugstreckenmodelle in Motorreglern grundsätzlich bekannt. Jedoch geht die diesbezügliche Weiterbildung von der Überlegung aus, dass --gerade für die Anwendung des Gasmotors, insbesondere mit Gemischbildung vor einem Verdichter und/oder Drosselklappenregeleung an einem Verdichterbypass und/oder an einer Motorzuführstrecke-- die eingangs genannte übliche Modellierung bereits im Ansatz unzureichend ist. Insbesondere zeigt sich, dass ein benötigter Gasmassenstrom wie er für einen Stationärbetrieb direkt aus dem Gemischmassenstrom ermittelt wird und der sich bloß aus einem Luftaufwand am Motor bestimmt, unzureichend ist.

Die Weiterbildung berücksichtigt --insofern für den ersten Aspekt der Erfindung-- optional erstmals die Überlegung, dass eine Strecke zwischen dem Ort einer Ansaugung des Ladefluids und Ort eines Brennraumeintritts vergleichsweise lang sein kann und damit per se ein vergleichsweise großes Volumen umfasst, das kaum realistisch in einem stationären Zustand beschreibbar ist. Vor allem bei einem Gasmotor-erweist sich eine Strecke zwischen dem Ort der Gemischbildung, z. B. vor dem Verdichter der Abgasturboaufladung, und dem Ort eines Brennraumeintritts als vergleichsweise lang und umfasst damit per se ein vergleichsweise großes Volumen, das kaum realistisch in einem stationären Zustand beschreibbar ist. Die teilweise großen Volumina können nämlich signifikante Gemischmassen speichern oder abgeben, wenn es bei Last- und/oder Drehzahländerung des Motors zu Druck und/oder Temperaturänderungen in den einzelnen Teilvolumina kommt.

Im optionalen ersten Aspekt wurde erkannt, dass dadurch der Massenstrom und/oder Zustand des Ladefluids bzw. --speziell bei einem Gasmotor der Gemischmassenstrom und/oder Gemisch-Zustand am Austritt des Gasmischers-- zeitweise von dem am Brennraumeintritt entkoppelt ist. Dieser Umstand findet bislang keine ausreichende Berücksichtigung in Ansaugstreckenmodellen, sei es für einen Gasmotor oder eine sonstige Brennkraftmaschine. Insbesondere sind übliche stationäre Betrachtungen eines Gasmotors, bei denen nur der Gemischdruck vor einem Zylinder beachtet wird, daher --wie vom optionalen ersten Aspekt der Erfindung erkannt-- nicht zielführend, um die Einhaltung definierter Verbrennungsluftverhältnisse zu gewährleisten.

Das Konzept der Erfindung sieht knapp gesagt vor, dass nachdem in dem ersten Aspekt wenigstens ein Massenstrom und/oder Zustand des Ladefluids --insbesondere wenigstens ein Gemisch-Massenstrom und/oder Gemisch-Zustand des Gemischanteils-- vor dem Motor, vorzugsweise basierend auf einem Ansaugstreckenmodell, bestimmt wird, erfindungsgemäß in dem zweiten Aspekt, insbesondere basierend auf einem Bestimmungsergebnis, die Verdichterbypass-Drossel (VDBK) in einer Abhängigkeit von der Motor-Drossel (DK) eingestellt werden. Zusätzlich oder alternativ zu einer Stellung einer Drossel wird insbesondere ein Öffnungsquerschnitt derselben bestimmt. Dabei ist zu berücksichtigen, dass dies insbesondere für eine transiente Betriebsweise der Brennkraftmaschine gilt. Vorzugsweise wird dies wahlweise mit einer ersten schnelleren Zeitskala oder einen der einer zweiten langsameren Zeitskala, insbesondere für die transiente Betriebsweise umgesetzt. Für eine stationäre Betriebsweise kann die transiente Verdichter-Bypass-Drossel-Ansteuerung insofern unerheblich sein als diese inaktiv ist. Die Auswahl einer Verdichter-Bypass-Drossel-Ansteuerung in einer Abhängigkeit von der Motor-Drossel ist somit vorbehaltlich eines Gültigkeitswertes, der anzeigt, dass die Verdichter-Bypass-Drossel und/oder die Motor-Drossel geöffnet ist.

Insgesamt hat die Erfindung den Vorteil, dass --insbesondere im Falle einer transienten Betriebsweise-- eine Stellung der Verdichterbypass-Drossel (VDBK) in einer Abhängigkeit von der Motor-Drossel (DK) derart gewählt werden kann, dass der Turbolader entlastet wird. Dies hat auch den Vorteil, dass --insbesondere im Falle eines von einer stationären Betriebsweise ausgehenden Betriebsweise-- eine Stellung der Verdichterbypass-Drossel (VDBK) in einer Abhängigkeit von der Motor-Drossel (DK) derart gewählt werden kann, dass der Turbolader ein besseres Lastaufschaltpotenzial bereits in bzw. ausgehend von einer stationären Betriebsweise aufbauen kann.

Grundsätzlich erstreckt sich das Konzept der Erfindung wie beansprucht allgemein auf jede Art einer aufgeladenen Brennkraftmaschine mit einem Verbrennungsmotor, die ein erstes und zweites Drosselorgan, insbesondere Drosselklappen, besitzt, die zur Lastregelung eingesetzt werden. Die Motor-Drossel ist insbesondere als eine erste Drossel-Klappe gebildet. Die Verdichterbypass-Drossel ist insbesondere als eine zweite Drossel-Klappe gebildet.

Das Konzept hat sich jedoch als besonders zweckmäßig zum Einsatz bei einer Gas-Brennkraftmaschine erwiesen; insbesondere da diese zusätzlich die Gemischbildung, zentral oder zylinderindividuell, berücksichtigen sollte. Insbesondere weiter vorteilhaft lässt sich das Konzept für Gas-Brennkraftmaschinen mit zentraler Gemischbildung vor einem Verdichter, d. h. vorzugsweise mit einem Gasmischer, und/oder mit zylinderindividueller Gemischbildung, d. h. vor einem Zylinder, anwenden. Insbesondere kann dies funkengezündete Gas-Brennkraftmaschinen betreffen. Grundsätzlich eignet sich das Konzept der Erfindung darüberhinaus auch für Zündstrahl-Brennkraftmaschinen, d. h. insbesondere Diesel-Gas-Brennkraftmaschinen oder andere Dual-Fuel-Brennkaftmaschinen, dies ebenfalls mit zentraler und auch zylinderindividueller Gemischbildung.

Insofern sind weder ein Gasmischer noch ein Einspritzsystem für Flüssigbrennstoff bei einer Brennkraftmaschine erforderlich zur Umsetzung des Konzepts der Erfindung; können aber in einer bevorzugten Weiterbildungen vorgesehen sein.

Im Ergebnis liefert das Konzept der Erfindung erstmals eine eigenständige und zeitlich optimierte Ansteuerung eines Drosselsytems mit angemessenen Reaktionszeiten je nach Betriebszustand einer Gas-Brennkraftmaschine, da basierend auf einem Bestimmungsergebnis eines Massenstroms und/oder eines Zustands des Ladefluids vor dem Motor die Verdichterbypass-Drossel (VDBK), insbesondere ein Öffnungsquerschnitt derselben in Abhängigkeit von der Motor-Drossel (DK), insbesondere eines Öffnungsquerschnits derselben eingestellt wird. Insbesondere betrifft dies die Ansteuerung der Verdichterbypass-Drossel, insbesondere Verdichterbypass-Klappe, in Abhängigkeit der Motor-Drossel, insbesondere Motor-Drosselklappe.

Die Ansteuerung kommt ohne eine aufwändige Kennfeldbedatung und ohne zusätzliche Sensoren aus. Ein Gemischmassenstrom über eine Drossel, insbesondere Klappe, kann räumlich modellbasiert ermittelt werden und zeitlich differentiell oder in endlichen Zeitschritten transient mit einer gewissen Schrittrate umgesetzt werden und nach Bedarf auf eine Auslegung der Brennkraftmaschine angepasst werden. Dadurch kann ein virtueller Klappen- bzw. Drosselsensor, z. B. bei einer VBP Klappe- bzw. Motor-Klappe zur Verfügung gestellt werden.

Die Aufgabe betreffend die Vorrichtung wird mit der Erfindung gelöst durch eine Regelungsvorrichtung für eine Brennkraftmaschine gemäß dem Anspruch 14.

Das Konzept der Erfindung führt zur Lösung der Aufgabe hinsichtlich der Vorrichtung auch auf eine Brennkraftmaschine gemäß Anspruch 16.

Insbesondere hat es sich als vorteilhaft erwiesen, die Brennkraftmaschine, insbesondere Gas-Brennkraftmaschine, mit einer Aufladung im Ansaugsystem zu versehen, insbesondere mit einer Aufladung umfassend ein Ladewärmetauscher. Je nach Dimensionierung der Brennkraftmaschine oder Gas-Brennkraftmaschine, insbesondere auf Basis eines Großmotors, kann eine Aufladung ein- oder zweistufig, vorzugsweise mit einer Abgasrückführung versehen sein. Insbesondere ist weiter eine Bypass-Strecke zur Ansaugstrecke des Ansaugsystems vorgesehen sein zur Umgehung der Aufladung. Es hat sich als vorteilhaft erwiesen, entsprechende Aktuatoren zur Beeinflussung des Ladedrucks wie beispielsweise Platten, Ventile, Drosseln, insbesondere eine Drosselklappe vor dem Receivervolumen und/oder vor einer Verdichterbypass-Klappe in der Bypass-Strecke vorzusehen. So kann je nach Maßgabe eines SOLL- und/oder IST-Ladedrucks der Ansaugstrecke eine An-Drosselung des Motors vorgenommen werden.

Insbesondere kann eine Brennkraftmaschine ein Ansaugsystem, mit einer Ansaugstrecke -- vorzugsweise mit einem Gasmischer oder einer zylinderindviduellen Gaszumischung -- und dem Motor mit einer Anzahl von Zylindern, aufweisen. In einer Abwandlung kann weiter ein Einspritzsystem vorgesehen sein, das vorteilhaft als ein Common-Rail-Einspritzsystem ausgebildet ist. Weiter hat es sich als vorteilhaft erwiesen, der Anzahl von Zylindern strömungsaufwärts vor den Zylindern ein Receivervolumen vorzuordnen, insbesondere im Ansaugstreckenmodell, das beispielsweise in Form eines Krümmers oder einer Mischstrecke oder dergleichen ausgeführt werden kann bzw. einen Krümmers oder eine Mischstrecke im Ansaugstreckenmodell beschreibt.

Wie sich insbesondere in Kreisprozesssimulationen und Versuchen an Gasmotoren zeigt, verbessert die Erfindung die Stabilität des Verbrennungsluftverhältnisses vor allem bei transientem Motorbetrieb (Lastauf-/-abschaltungen), sodass zum einen größere Lastsprünge dargestellt werden können und zum anderen eine einfachere Abstimmung des Lastschaltbetriebs, auch am Prüfstand, möglich wird.

Diese und andere vorteilhafte Weiterbildungen der Erfindung sind den Unteransprüchen zu entnehmen und geben im Einzelnen vorteilhafte Möglichkeiten an, das Konzept der Erfindung im Rahmen der Weiterbildungen und unter Angabe weiterer Vorteile zu realisieren. Die Unteransprüche beziehen sich weitgehend auf eine Gas-Brennkraftmaschine und spezifizieren in diesem Sinne einen Massenstrom des Ladefluids vor dem Motor bereits als Gemisch-Massenstrom eines Gas-Luft-Gemisches vor dem Motor und den Zustand des Ladefluids vor dem Motor als Gemisch-Zustand eines Gas-Luft-Gemisches vor dem Motor. Gleichwohl ist zu verstehen, dass das Konzept der Unteransprüche nicht beschränkt ist auf eine Gas-Brennkraftmaschine sondern grundsätzlich erweiterbar ist auf eine allgemeine aufgeladene Brennkraftmaschine auf Grundlage des Anspruchs 1; insofern ist die folgende Beschreibung betreffend einen Gemisch-Zustand eines Gas-Luft-Gemisches allgemein auf einen Zustand des Ladefluids und betreffend einen Gemisch-Massenstrom auf einen Massenstrom eines Ladfluids gelesen werden kann. Vorzugsweise ist unter einem Ladefluid insofern eine Ladeluft oder ein Ladeluft/Abgas-Gemisch zu verstehen, insbesondere im Falle einer allgemeinen aufgeladenen Brennkraftmaschine, oder eine Ladeluft im Falle einer zylinderindividuellen Gasgemischbildung bei einer Gas-Brennkraftmaschine zu verstehen. Unter einem Gas-Luft-Gemisch ist insbesondere ein Brenngas-Luft-Gemisch bei einer Gas-Brennkraftmaschine mit zentraler Gemischbildung, insbesondere in einem Gasmischer, zu verstehen, nicht aber darauf beschränkt.

In einer besonders bevorzugten Weiterbildung betreffend den ersten Aspekt ist weiter vorgesehen:
- eine Aufteilung der Ansaugstrecke --d. h. zwischen Gasmischer und Motor-- in mehrere, insbesondere wenigstens zwei Volumina, vorzugsweise genau zwei Großvolumina, von denen eines das Receivervolumen ist, und/oder
- die Nutzung der Befüll- und Entleermethode und/oder die Nutzung von Druck- und Temperaturinformationen von bereits vorhandenen Messstellen. Für das Ansaugstreckenmodell kann die Befüll- und Entleermethode, insbesondere unter Nutzung von Druck- und Temperaturinformationen von bereits vorhandenen Messstellen, verwendet werden. Im Rahmen des ersten Aspekts lassen sich so Gemisch-Massenstrom und/oder Gemisch-Zustand des Gemischanteils im Receivervolumen besonders vorteilhaft berücksichtigen.

Eine Weiterbildung geht in dem zweiten Aspekt von der Überlegung aus, dass es bei Brennkraftmaschinen allgemein und Gasmotoren im speziellen, die ottomotorisch betrieben werden, dem verbessert geregelten Einsatz der Drosselklappen zur Lastregelung eine erhöhte Bedeutung zukommt, beispielsweise im Rahmen der Quantitätsregelung. Demnach wird in dem zweiten Aspekt im Ansatz erstmals die modellbasierte Drosselklappensteuerung gewährleistet, nämlich die Einstellung der Verdichterbypass-Drossel (VDBK) in einer Abhängigkeit von der Motor-Drossel (DK), insbesondere die Ansaugstreckenmodell basierte Steuerung einer Motor-Drosselklappe und/oder einer Verdichterbypass-Klappe gewährleistet.

Vorzugsweise kann dies im Rahmen einer simultanen Echtzeit-Bestimmung umgesetzt werden. Mittels dem Konzept des zweiten Aspekts wird eine Ansaugstreckenmodell basierte Ansteuerung der Verdichterbypass-Drossel (VDBP) und/oder der Motor-Drosselklappe (DK) bei transienten Laständerungen vorgesehen. Insbesondere dient das Konzept dazu, für eine Ansteuerung des Verdichterbypasses, differentielle Änderungen des modellbasiert ermittelten Gemischmassenstroms über wenigstens eine Drosselklappe zu erreichen, vorzugsweise über die Motor-Drosselklappe (DK) und/oder die Verdichterbypassklappe (VBP).

Im Rahmen einer besonders bevorzugten Weiterbildung ist in einem dritten Aspekt weiter vorgesehen, dass der Massenstrom und/oder Zustand des Ladefluids, --speziell bei einem Gasmotor der Gemisch-Massenstrom und/oder Gemisch-Zustand des Gemischanteils-- auf einer ersten langsameren Zeitskala und/oder einer zweiten schnelleren Zeitskala bestimmt wird und die Verdichterbypass-Drossel (VDBK) in einer Abhängigkeit von der Motor-Drossel (DK) eingestellt wird, wahlweise auf Grundlage einer der Zeitskalen. Eine Betriebsart eines stationären oder eines transienten Betriebs wird bevorzugt ausgewählt indem wenigstens ein Differenzwert über die Motor-Drossel (DK) betreffend den Gemisch-Massenstrom und/oder den Gemisch-Zustand des Gemischanteils gebildet wird. Beispielsweise kann anhand eines Differenzwerts einer Massenstrom-Differenz und/oder einer Druckdifferenz oder sonstigen Gemisch-Zustands über die Motor-Drossel (DK) auf eine der Betriebsarten eines stationären oder eines transienten Betriebs erkannt werden.

Die Weiterbildung geht von der Überlegung aus, dass ein vorteilhafter transienter Betrieb einer Gas-Brennkraftmaschine möglichst unter Berücksichtigung eines Ladedrucks der Ansaugstrecke, insbesondere unter Berücksichtigung einer An-Drosselung der Ladeluft --in der Motor-Drosselklappe und/oder in der Verdichter-Bypass-Klappe-- erfolgen sollte. Dies kann insbesondere auch beim Umschalten zwischen Gasbetrieb und Dieselbetrieb von Vorteil sein. In beiden Fällen sind die Besonderheiten eines Gasmotors zu berücksichtigen.

So kann auch bei hochdynamischen Vorgängen ein Turbolader entlastet werden. Beispielsweise kann ein Verdichterpumpen oder generell eine Betriebsweise eines Turboladers außerhalb seines definierten Betriebsbereiches vermieden werden. In einer stationären Betriebsweise kann die Abhängigkeit genutzt werden, ein Lastaufschaltpotenzial zu verbessern. Die Weiterbildung bietet in dem dritten Aspekt eine Basis dafür, dass abhängig von der Betriebsweise der Brennkraftmaschine eine Regelung wählbar ist, deren Zeitskala auf die Dynamik abgestimmt ist. So kann beispielsweise in einer besonders bevorzugten Ausführungsform eine Ansteuerung der Verdichtbypassklappe durch Verwendung eines schnellen, ungenaueren Signals für den Massenstrom über Drosselklappen auf Basis einer Durchflussgleichung und eines langsamen genaueren Signals aus dem Ansaugstreckenmodell erfolgen.

Insbesondere hat es sich als vorteilhaft erwiesen, dass der Massenstrom und/oder Zustand des Ladefluids --insbesondere Gemisch-Massenstrom und/oder Gemisch-Zustand des Gemischanteils-- auf einer ersten langsameren Zeitskala und auf einer zweiten schnelleren Zeitskala simultan in Echtzeit --d. h. in Echtzeit zum tatsächlichen Betriebsablauf-- bestimmt wird. Es werden zeitaktuell zum Betriebszustand entsprechende Daten zum Massenstrom und/oder Zustand des Ladefluids, insbesondere Gemisch-Massenstrom und/oder Gemisch-Zustand des Gemischanteils, verfügbar gemacht. Vorteilhaft ist ein virtueller Sensor geschaffen, der in Echtzeit Werte zum Massenstrom und/oder Zustand des Ladefluids, insbesondere Gemisch-Massenstrom und/oder Gemisch-Zustand des Gemischanteils, liefert.

Zusätzlich oder alternativ hat es sich als vorteilhaft erwiesen, dass der Massenstrom und/oder Zustand des Ladefluids, insbesondere Gemisch-Massenstrom und/oder Gemisch-Zustand des Gemischanteils, parallel zueinander auf einer ersten langsameren Zeitskala und auf einer zweiten schnelleren Zeitskala bestimmt wird. Dadurch ergeben sich bevorzugte Möglichkeiten eines Abgleichs von virtuell bestimmten Betriebszuständen; mit dieser Weiterbildung ist eine wählbare Grundlage geschaffen auf deren Basis die Regelung vorgenommen werden kann.

Insbesondere kann die Regelung wahlweise auf einer ersten Datenbasis wie sie sich auf der langsameren Zeitskala entwickelt oder auf einer zweiten Datenbasis wie sie sich auf der schnelleren Zeitskala entwickelt vorgenommen werden. Die erste Möglichkeit kann Vorteile hinsichtlich der Genauigkeit bieten. Die zweite Möglichkeit kann Vorteile hinsichtlich einer Reaktionszeit der Regelung im Hinblick auf sich transient ändernden Betriebsbedingungen bieten.

Vorteilhaft wird zur Einstellung der Motor-Drossel leitend, d. h. in einer ersten Regel- und/oder Steuerstufe, ein Massenstrom, insbesondere Gemisch-Massenstrom, über die Motor-Drossel (DK) bestimmt; dies wahlweise auf einer ersten oder auf einer zweiten Zeitskala oder parallel zueinander auf beiden Zeitskalen, insbesondere derart dass Vergleichswerte aus jeder der Zeitskala in zuordnenbarer Weise zur Verfügung stehen und/oder abgeglichen werden können. Zusätzlich oder alternativ kann führend, d. h. in einer ersten Regel- und/oder Steuerstufe, ein Zustand, insbesondere Gemisch-Zustand, in dem Receiver berücksichtigt werden auf einer ersten und/oder einer zweiten Zeitskala, insbesondere derart dass Vergleichswerte zur Verfügung stehen und/oder abgeglichen werden. Damit kann auf eine vorteilhafte Zeitskala einer Regelung geschlossen werden bzw. es können Koeffizienten einer schnellen und langsamen Regel- und/oder Steuerstufe abgeglichen werden. Bevorzugt können im Falle eines stationären Betriebs der Brennkraftmaschine Rechenergebnisse betreffend eine erste langsamere Zeitskala betreffend den stationären Betrieb und Rechenergebnisse betreffend eine zweite schnellere Zeitskala betreffend den transienten Betrieb miteinander in Beziehung gesetzt werden. Z. B. können Ergebnisse eines Vergleichs zur Skalierung von Koeffizienten einer zeitabhängigen Durchflussgleichung genutzt werden. Dies führt zu einer Lernfunktion, die sich während des Betriebs der Brennkraftmaschine automatisch ergibt und zu einer verbesserten Betriebsanpassung von Koeffizienten einzelner Regeleinheiten genutzt werden kann.

Beispielsweise kann basierend auf einem Bestimmungsergebnis für einen stationären Betrieb die Einstellung der Verdichterbypass-Drossel (VDBK), insbesondere ein Öffnungsquerschnitt derselben, in Abhängigkeit der Motor-Drossel (DK), insbesondere einer Stellung derselben und/oder einen Öffnungsquerschnitt derselben, anhand einer ersten langsameren Zeitskala und/oder basierend auf einem Bestimmungsergebnis für einen transienten Betrieb die Einstellung der Verdichterbypass-Drossel (VDBK) in Abhängigkeit der Motor-Drossel (DK) anhand einer zweiten schnelleren Zeitskala vorgenommen werden.

Die Einstellung der Verdichterbypass-Drossel (VDBK) kann in Abhängigkeit der Motor-Drossel (DK) simultan für den ersten Fall einer ersten langsameren Zeitskala und den zweiten Fall einer zweiten schnelleren Zeitskala erfolgen. Insbesondere kann im Rahmen einer besonders bevorzugten Weiterbildung eine Ansteuerung der Verdichterbypass-Drossel durch Verwendung eines schnellen --ggfs. ungenaueren-- Signals für den Massenstrom über Drosselklappen auf Basis einer Durchflussgleichung und eines langsamen --ggfs. genaueren-- Signals aus dem Ansaugstreckenmodell vorgesehen sein.

Insbesondere kann ein Abgleich des schnellen, ggfs. ungenaueren, Signals mit dem ggfs. genaueren, langsamen Signal im Stationärbetrieb ("Autolearn-Funktion") vorgesehen sein.

Die Einstellung der Verdichterbypass-Drossel (VDBK) kann in Abhängigkeit der Motor-Drossel (DK) simultan für den ersten Fall einer ersten langsameren Zeitskala und den zweiten Fall einer zweiten schnelleren Zeitskala erfolgen. Insbesondere kann im Rahmen einer besonders bevorzugten Weiterbildung eine Ansteuerung der Verdichterbypass-Drossel durch Verwendung eines schnellen --ggfs. ungenaueren-- Signals für den Massenstrom über Drosselklappen auf Basis einer Durchflussgleichung und eines langsamen --ggfs. genaueren-- Signals aus dem Ansaugstreckenmodell vorgesehen sein.

Besonders bevorzugt kann die Einstellung der Verdichterbypass-Drossel (VDBK) in Abhängigkeit der Motor-Drossel (DK) unter Bestimmung eines quasistationären Gemisch-Massenstroms für wenigstens das Receivervolumen erfolgen, insbesondere zusätzlich des Lade-Wärmetauschers, vorzugsweise mittels der Befüll-Entleer-Methode, erfolgen. Insbesondere kann dies auf einer ersten langsameren Zeitskala erfolgen.

Besonders bevorzugt kann die Einstellung der Verdichterbypass-Drossel (VDBK) in Abhängigkeit der Motor-Drossel (DK) unter Bestimmung eines transienten Gemisch-Massenstroms für die Motor-Drossel (DK), insbesondere mittels wenigstens einer zeitabhängigen Durchflussgleichung, erfolgen. Insbesondere kann dies auf einer zweiten schnelleren Zeitskala, erfolgen. Insbesondere erfolgt also im ersten Fall die Einstellung der Verdichterbypass-Drossel (VDBK) auf schneller Zeitskala bevorzugt als Standardvariante für transiente Betriebsbedingungen und im zweiten Fall die Einstellung der Verdichterbypass-Drossel (VDBK) auf langsamer Zeitskala bevorzugt für transiente Betriebsbedingungen, bei denen die schnelle Zeitskala aus numerischen Gründen nicht genutzt werden kann. Im Rahmen dieser besonders bevorzugten Weiterbildung sind für beide Varianten der Verdichterbypassansteuerung (schnelle und langsame Zeitskala) nur für transiente Betriebsbedingungen gedacht. Die schnelle Zeitskala ist bevorzugt die Standardvariante, die nur in den Fällen, in denen die zugrundeliegenden Rechnungen aus numerischen Gründen ungültig oder unzureichend werden, nicht genutzt wird. In diesen Fällen wird als Ersatzvariante die langsamre Zeitskala herangezogen.

So wurde im Rahmen einer ersten Teilproblematik beispielsweise erkannt, dass es -- insbesondere bei Gas-Motoren-- bei Lastabwürfen und demzufolge beim Schließen der Drosselklappen zu einem Verdichterpumpen kommen kann; dies insbesondere wenn der Verdichter des Abgasturboladers durch eine schnelle Verringerung des durch ihn geförderten Gasmassenstroms kurzzeitig außerhalb seines Betriebsbereichs betrieben werden sollte. Die Weiterbildung hat erkannt, dass durch das Öffnen einer Verdichterbypassklappe (VBP-Klappe), die zur Steuerung des Verdichterbypassmassenstroms verwendet werden sollte, das Verdichterpumpen vermieden werden kann. Insbesondere kann ein transienter Betrieb umfassen: einen Lastabwurf, ein Lastaufschalten, einen Brennstoffwechsel. Für solche und andere Fälle kann vorgesehen sein, z. B. ein Schließen der Motor-Drossel DK und praktisch ein simultanes Öffnen der Verdichterbypass-Drossel; insbesondere mit einer im Rahmen des Konzepts möglichen schnellen Regel-Reaktion kann dadurch eine Vermeidung von Verdichter-Pumpen bei Lastabwurf vermieden werden.

Außerdem kann im Rahmen einer Lösung zu einer zweiten Teilproblematik vorgesehen sein, das Lastaufschaltpotential eines Gasmotors durch Schließen der VBP-Klappe zu verbessern; insbesondere wenn diese im Stationärbetrieb geöffnet war. Es kann auch beispielsweise ein Schließen der Verdichterbypass-Drossel bei stationärem Betrieb und anschließendes Öffnen derselben zur Erhöhung von Lastaufschaltpotenzial genutzt werden.

In der Umsetzung kann bevorzugt auf eine Betriebsart eines stationären oder transienten Betriebs erkannt werden, indem wenigstens ein Differenzwert über eine Drossel, insbesondere die Motor-Drossel (DK), betreffend den Gemisch-Massenstrom und/oder Gemisch-Zustand des Gemischanteils gebildet wird. Insbesondere kann dazu eine Massenstrom- und/oder Druckdifferenz gebildet werden und anhand des Differenzwerts auf eine der Betriebsarten erkannt wird. Dies nutzt in etwa eine besonders zeiteffizient durchführbare Schwellwertregelung.

So kann beispielsweise auf eine Betriebsart des transienten Betriebs erkannt werden, wenn ein Differenzwert über eine Drossel, insbesondere über die Motor-Drossel (DK) betreffend den Gemisch-Massenstrom und/oder Gemisch-Zustand des Gemischanteils oberhalb eines Grenzwerts (GW) liegt und/oder einen Vorzeichenwechsel aufweist. Dies sind Hinweise, die genutzt werden können im Rahmen einer Ansteuerungsregelung mit transienter VBP-Ansteuerung.

Anders herum kann auf eine Betriebsart des stationären Betriebs erkannt werden, wenn ein Differenzwert über eine Drossel, insbesondere über die Motor-Drossel (DK), betreffend den Gemisch-Massenstrom und/oder Gemisch-Zustand des Gemischanteils unterhalb eines Grenzwerts (GW) liegt und/oder keinen Vorzeichenwechsel aufweist.

Zur Steuerung einer Stellgröße einer Drossel hat es sich im übrigen als vorteilhaft erwiesen, dass einer ersten und zweiten Drossel, insbesondere der Motor-Drossel (DK) ein erstes Drosselkennfeld und/oder der Verdichterbypass-Drossel (VDPK) ein zweites Drosselkennfeld zugeordnet ist. Im Rahmen einer weiteren besonders bevorzugten Weiterbildung ist eine Nutzung eines Drosselkennfelds sinnvoll, um eine Massenstromänderung über die Zeit als Funktion eines Druckverhältnisses der VBP-Strecke bzw. VBP-Klappenstellung zu erreichen (dm/dt=f(Druckverhältnis über VBP-Strecke, VBP-Klappenstellung)). Für die Verdichterbypassstrecke ist die Ermittlung des SOLL-VBP-Klappenöffnungswinkels vorgesehen. Insbesondere kann ein Drosselkennfeld einen quasistationären Massenstrom angeben.

Ein Drosselkennfeld weist vorteilhaft eine erste Abhängigkeit eines Drucks vor und/oder nach der Drossel auf. Zusätzlich oder alternativ kann ein Drosselkennfeld n zweiter Abhängigkeit eine Drosselstellung angeben. Das erste und/oder zweite Drosselkennfeld hat insbesondere einen quasistationären Massenstrom in erster Abhängigkeit eines Drucks vor und/oder nach der Drossel, und/oder in zweiter Abhängigkeit einer Drosselstellung angeben.

Desweiteren ist der Einsatz eines virtuellen Gassensors dem Erreichen gegenwärtiger und zukünftiger Abgasnormen zuträglich. Insbesondere kann eine Echtzeit-Berechnung der Gemischmassenströme an verschiedenen Stellen der Ansaugstrecke im Motorregler erfolgen. Vorzugsweise kann dies auch genutzt werden, um eine Zumischung derjenigen Gasmischer durch die vorhandene Gaszumesseinheit zu erreichen, die zur virtuell bestimmten Gemischmasse im gewünschten Verbrennungsluftverhältnis führt.

Insbesondere kann das Ansaugstreckenmodell wenigstens einen Massenstrom und/oder Zustand des Ladefluids, insbesondere wenigstens einen Gemisch-Massenstrom und/oder Gemisch-Zustand des Gemischanteils, im Receivervolumen und wenigstens einem weiteren Grossvolumen der Ansaugstrecke angeben, insbesondere wenigstens ein weiteres Grossvolumen eines oder mehrerer Lade-Wärmetauscher und/oder der Bypass-Strecke und/oder des oder der Verdichter berücksichtigen.

Im Rahmen einer besonders bevorzugten Ausbauvariante kann mittels einem wenigstens einem späteren Gemischzustand zugeordneten Ausgabe-Gemischanteil des Gas-Luft-Gemisches, ein einem früheren Gemischzustand zugeordneter Eingabe-Gemischanteil des Gas-Luft-Gemisches gebildet werden. Dabei hat es sich als vorteilhaft erwiesen, dass der Eingabe-Gemischanteil im früheren Gemischzustand in einer Regelung über den Ausgabe-Gemischanteil im späteren Gemischzustand bestimmt wird, und die Bestimmung mittels dem als Basis eines Rechenmodells für die Ansaugstrecke dienenden Ansaugstreckenmodell erfolgt. Insbesondere kann der Ausgabe-Gemischanteil an einer Motorzuführung und der Eingabe-Gemischanteil am Gasmischer bestimmt werden, insbesondere im Rahmen einer simultanen Echtzeitbestimmung. Dies kann als Angabe eines virtuellen Gemischmassensensoren zwischen Zylindereingang und Gasmischerausgang angesehen werden.

Bevorzugt ist bei einem Gasmotor der Gasbetrieb ein funkengezündeter Gasbetrieb; dieser erweist sich als besonders effizient und für viele Anwendungen als passend umsetzbar. Grundsätzlich kann sich jedoch auch ein anderes Zündprinzip eignen, wie z. B. ein Zündsystem zur Diesel oder anderen Flüssigbrennstoff-Zündung. Insbesondere kann der Gasbetrieb alternativ auch ein Zündstrahlbetrieb mit externer Gemischbildung eines Gas-Luft-Gemisches sein und unter Verwendung eines Diesel-Zündstrahls oder eines anderen Flüssigbrennstoff-Zündstrahls.

Generell, auch wenn vorliegend nicht im Vordergrund beschrieben, besteht gleichwohl die Möglichkeit, nicht zuletzt wegen vergleichsweise konstanter Brennstoffqualität, die Gas-Brennkraftmaschine entweder mit Gas oder mit Flüssigbrennstoff wie Diesel oder verflüssigtem Gas zu betreiben. Insbesondere kann im Betrieb dem Motor dann ein Brennstoff-Gemisch umfassend ein Ladegemisch und/oder einen Flüssigbrennstoff zugeführt werden. Dabei kann der Motor in einem ersten Betriebszustand im Dieselbetrieb --mit Diesel oder einem anderen Flüssigbrennstoff-- und in einem zweiten Betriebszustand im Gasbetrieb --mit Gas als Brennstoff in dem Ladegemisch-- betrieben werden. Diese Art von Gas-Brennkraftmaschinen werden auch als Mehrbrennstoff-Brennkraftmaschinen (Dual-Fuel- Brennkraftmaschinen) bezeichnet und können neben der bevorzugten Brennstoffwahl von Diesel und Gas auch mit verschiedensten anderen Brennstoffen betrieben werden. Insbesondere kann alternativ im Gasbetrieb die Gas-Brennkraftmaschine im Zündstrahlbetrieb mit externer Gemischbildung eines Gas-Luft-Gemisches und einem Dieselzündstrahl betrieben werden. So werden Motoren der Gas-Brennkraftmaschine auch als Zündstrahlmotoren bezeichnet und sind regelmäßig auf der Grundlage einer Dieselmotorenkonstruktion aufgebaut und zählen zu den neusten Technologien, insbesondere im Bereich umweltgerechter Einsatzmöglichkeiten von Großmotoren. Ein Zündstrahlmotor kann auch mit Flüssigkraftstoff wie Diesel oder anderem verflüssigten Kraftstoff wie verflüssigtem Naturgas (LNG) oder auch verflüssigtem Erdgas (LTG) betrieben werden; zumeist kann eine Gas-Brennkraftmaschine einen Gas-Diesel-Motor zur Bildung einer Gas-Diesel-Brennkraftmaschine aufweisen.

Insbesondere weist eine Gas-Brennkraftmaschine dann ein Einspritzsystem auf, das sich vorzugsweise elektronisch regeln lässt. Insbesondere kann eine Brennkraftmaschine dazu weiter ein Einspritzsystem aufweisen, das vorteilhaft als ein Common-Rail-Einspritzsystem ausgebildet ist. Insbesondere lässt sich ein Einspritzsystem regeln für unterschiedliche Gasqualitäten, wie Biogas oder Erdgas, in flüssiger Form oder auch für den Einsatz von Ölen wie Pflanzenölen oder dergleichen als flüssiger Brennstoff eignet. Hier haben sich vor allem Common-Rail-Einspritzsysteme, ggf. aber auch Pumpe-Düse-Einspritzsysteme mit elektronischer Regelung, bewährt. Das Zündmedium, im Gasbetrieb, kann dem eigentlichen gasförmigen Brennstoff des Ladegemisches im Zylinder bei hoher Verdichtung zugegeben werden oder auch dem Ansaugkanal zugegeben werden. Die im Gasbetrieb, insbesondere funkengezündeten Gasbetrieb oder Zündstrahlbetrieb, mit externer Gemischbildung arbeitenden Gas-Motoren sind insgesamt flexibler in der Brennstoffverwendung und noch emissionsärmer.

Ausführungsbeispiele der Erfindung werden nun nachfolgend anhand der Zeichnung in Bezug auf einen Gasmotor beschrieben. Diese soll die Ausführungsbeispiele nicht notwendigerweise maßstäblich darstellen, vielmehr ist die Zeichnung, wo zur Erläuterung dienlich, in schematisierter und/oder leicht verzerrter Form ausgeführt. Im Hinblick auf Ergänzungen der aus der Zeichnung unmittelbar erkennbaren Lehren wird auf den einschlägigen Stand der Technik verwiesen. Dabei ist zu berücksichtigen, dass vielfältige Modifikationen und Änderungen betreffend die Form und das Detail einer Ausführungsform vorgenommen werden können, ohne von der allgemeinen Idee der Erfindung abzuweichen. Die in der Beschreibung, in der Zeichnung sowie in den Ansprüchen offenbarten Merkmale der Erfindung können sowohl einzeln als auch in beliebiger Kombination für die Weiterbildung der Erfindung wesentlich sein. Zudem fallen in den Rahmen der Erfindung alle Kombinationen aus zumindest zwei der in der Beschreibung, der Zeichnung und/oder den Ansprüchen offenbarten Merkmale. Die allgemeine Idee der Erfindung ist nicht beschränkt auf die exakte Form oder das Detail der im Folgenden gezeigten und beschriebenen bevorzugten Ausführungsform oder beschränkt auf einen Gegenstand, der eingeschränkt wäre im Vergleich zu dem in den Ansprüchen beanspruchten Gegenstand. Bei angegebenen Bemessungsbereichen sollen auch innerhalb der genannten Grenzen liegende Werte als Grenzwerte offenbart und beliebig einsetzbar und beanspruchbar sein. Weitere Vorteile, Merkmale und Einzelheiten der Erfindung ergeben sich aus der nachfolgenden Beschreibung der bevorzugten Ausführungsbeispiele sowie anhand der Zeichnung; diese zeigt in:

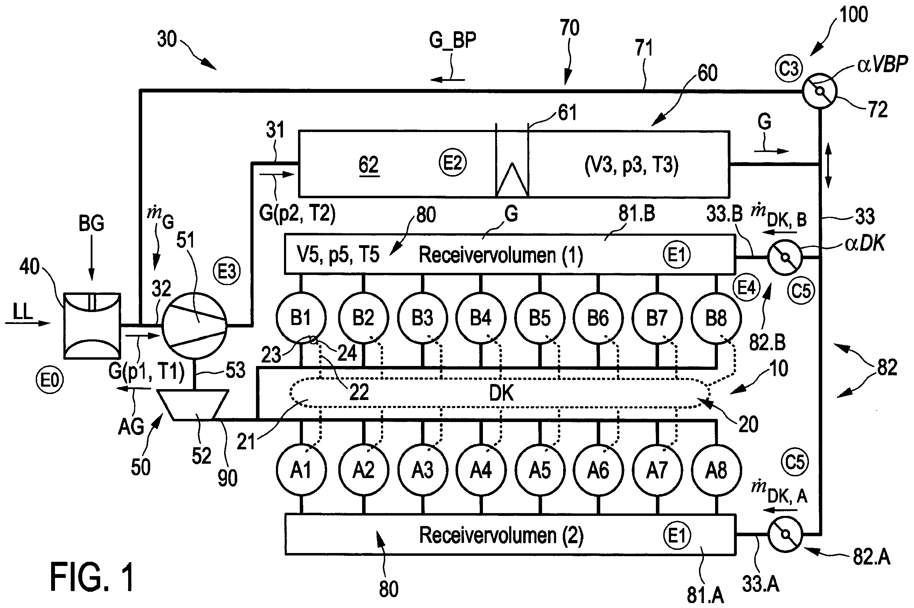

- Fig. 1: ein Schema einer Gas-Brennkraftmaschine mit einem Gasmischer sowie einer Ansaugstrecke mit Aufladung durch einen Turbolader und einen Ladewärmetauscher sowie einem Motor mit einer Anzahl von Zylindern nach einem Receivervolumen, wobei die Aufladung durch eine Bypasstrecke umgangen werden kann - die Gas-Brennkraftmaschine ist für einen funkengezündeten Gasbetrieb ausgelegt; in einer gestrichelt gezeigten Alternative kann die Gas-Brennkraftmaschine auch als Gas-Diesel-Brennkraftmaschine ausgelegt sein und im reinen Dieselbetrieb als auch im Mischbetrieb oder im reinen Gasbetrieb (z. B. als Zündstrahlbetrieb unter Einspritzung eines Zündgemisches in Form von Diesel) betreibbar sein, wobei das Einspritzsystem in Form eines gestrichelt dargestellten Common-Rail-Systems gebildet ist;

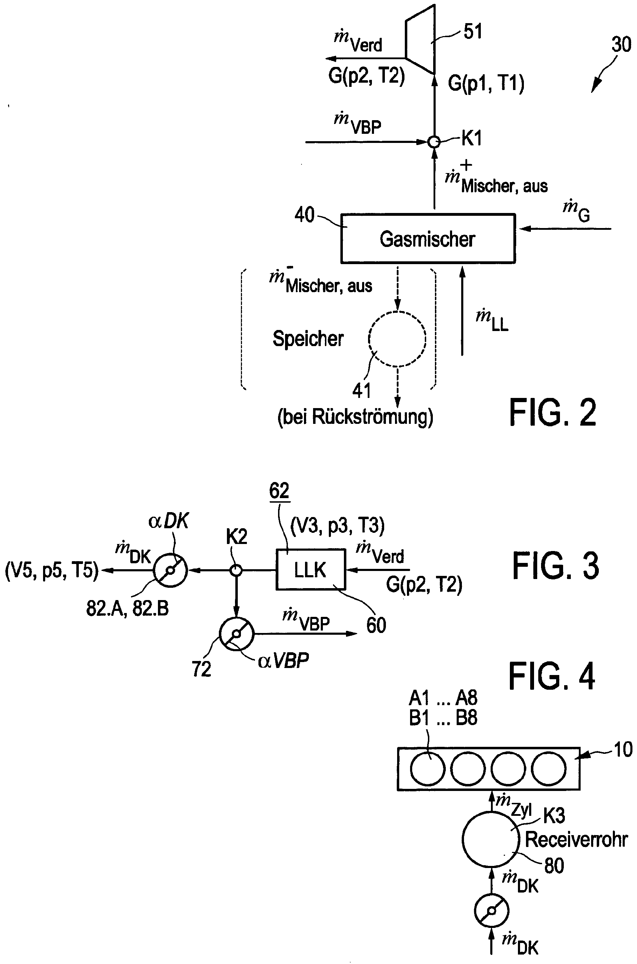

- Fig. 2: ein erstes Rechenschema zur Bestimmung einer Gemisch-Zusammensetzung (Verdichterbypass) mittels einer Steuerung und/oder Reglung, wobei eine Berechnung eines SOLL-Gasmassenstroms aus dem Gemischmassenstrom, der den Gasmischer verlässt, erfolgt und wobei eine Rückströmung von Gas-Luft-Gemisch aus dem Gasmischer zur Luftseite vorteilhaft berücksichtgt ist, nämlich bei der eine weitere Anreicherung durch Brenngas beim erneuten Ansaugen vermieden ist, durch Speichern der rückströmenden Gasmasse;
- Fig. 3: ein zweites Rechenschema zur Bestimmung einer Gemisch-Zusammensetzung (Massenstrom Ladeluftkühler) mittels einer Steuerung und/oder Reglung wobei eine Berechnung eines Gemischmassenstroms erfolgt, der durch den Verdichter in das Behältervolumen zwischen Verdichteraustritt, Drossel- und Verdichtrerbypassklappe strömt,
- Fig. 4: ein drittes Rechenschema zur Bestimmung einer Gemisch-Zusammensetzung (Zylinderfüllung) mittels einer Steuerung und/oder Reglung wobei eine Berechnung eines Gemischmassenstroms erfolgt, der aus den Receivervolumina in die Brennräume der Zylinder strömt;

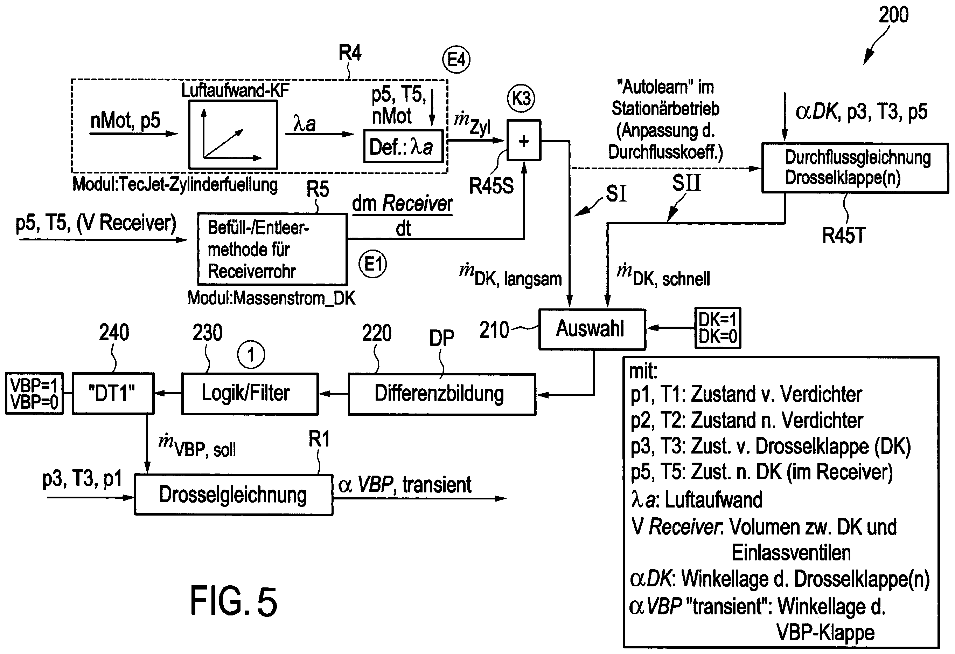

- Fig. 5: eine Schemadarstellung einer bevorzugten Ausführungsform einer Reglerstruktur für den Gas-Betrieb, wobei eine Stellung für eine Verdichterbypass-Drossel ermittelt wird, die abhängig von einer Stellung einer Motor-Drossel ist und wobei eine langsamere und eine schnellere Stellvorgabe mittels einer Bestimmung eines Gemisch-Massenstroms über die Motor-Drossel gemacht wird, wobei die langsamere Stellvorgabe auf Basis eines quasistationären Gemisch-Massenstroms und/oder die schnellere Stellvorgabe auf Basis eines transienten Gemisch-Massenstroms über die Motor-Drossel gemacht wird.

Fig. 1 zeigt eine Gas-Brennkraftmaschine 100 mit einem Motor 10 sowie einem Ansaugsystem mit einer verzweigten Ansaugstrecke 30. In der Ansaugstrecke ist u. a. ein Gasmischer 40 und zur Bildung einer Aufladung, ein Turbolader 50 und ein Ladewärmetauscher 60, hier in Form eines Ladeluftkühlers, sowie ein Bypass 70 angeordnet.

Der Motor ist vorliegend mit einer Anzahl von sechzehn Zylindern als V-Motor mit acht Zylindern Ai, i=1..8 auf einer A-Seite und acht Zylindern Bi, i=1..8 auf einer B-Seite ausgeführt; diese Art einer Zylinderanordnung und Anzahl ist vorliegend lediglich beispielhaft dargestellt sind. Insbesondere für großmotorige Anwendungen eignen sich auch Auslegungen des Motors mit zehn, zwölf, zwanzig, vierundzwanzig oder achtundzwanzig Zylindern oder einer anderen Anzahl von Zylindern.

Im Falle einer alternativen oder zusätzlichen Auslegung als Dual-Fuel-Brennkraftmaschine weist die Brennkraftmaschine auch ein gestrichelt gezeigtes Einspritzsystem 20 auf, das vorliegend als Common-Rail-System mit einem Common-Rail 21 gebildet ist, von dem eine Anzahl von Einspritzleitungen 22 --jeweils mit Injektor 23 und einem dem Injektor vorgeordneten Einzelspeicher 24-- zu je einem Zylinder Ai, Bi, i=1..8 des Motor 10 abzweigen. Das Einspritzsystem 20 ist ausgebildet, flüssigen Brennstoff wie Diesel oder auch einen anderen verflüssigten oder flüssigen Brennstoff zu portionieren, um diesen in einem Dieselbetrieb als Flüssigbrennstoff oder in einem Gas- bzw. Zündstrahl-Betrieb als Zündstrahl jeweils zu Beginn eines Arbeitsspiels eines Zylinders Ai, Bi einzuspritzen; dies bei sehr hohen Einspritzdrücken. Demgemäß weist der Motor 10 in dieser Variante weiter ein Common-Rail-Einspritzsystem 20 für einen Flüssigbrennstoff, hier insbesondere Dieselbrennstoff, sowie eine Aufladung 50 mit einem Ladewärmetauscher 60 sowie mit einem Bypass 70 zur Umgehung der Aufladung 50 und des Ladewärmetauschers 60 auf.

Weiter bezugnehmend auf den mit durchgezogenen Strichen gezeigten wesentlichen Teil der Ausführungsform, saugt der am einlassseitigen Ende des Ansaugsystems an die Ansaugstrecke 30 angebundene Gasmischer 40 Ladeluft LL aus der Umgebung an und mischt dieser Brenngas BG zu. Das Ladegemisch, im Gasbetrieb auch als Brenngasgemisch zu bezeichnen, --im folgenden auch kurz "Gemisch G"-- mit Massendurchsatz m(')_G ("( ')" ist in der Zeichnung der Übersichtlichkeit als Punkt über der Masse m oder anderen Größe dargestellt) wird mit dem Ansaugdruck p1 und bei einer Ansaugtemperatur T1, die im wesentlichen der Umgebungstemperatur entspricht, über eine Verdichterstrecke 32 einem Verdichter 51 des Turboladers 50 zugeführt und dort verdichtet auf einen Verdichtungsdruck p2 bei einer Verdichtungstemperatur T2. Der Verdichter 51 wird von einer Turbine 52 angetrieben und sitzt mit dieser auf einer gemeinsamen Laderachse 53; die Turbine 52 des Abgasstrangs 90 wiederum wird durch das den Motor 10 verlassende Abgas AG im Abgasstrang 90 angetrieben. Der in Folge der Verdichtung auf die Verdichtungstemperatur T2 aufgeheizte Massenfluss m(')_G des Gemisches G wird einer Kühlstrecke 31 der Ansaugstrecke 30 zugeführt und dort in einem Ladewärmetauscher 60 über eine Kühlerstruktur 61 geleitet; in dem hier symbolisch dargestellten Wärmetauschervolumen 62 findet ein Wärmetausch mit einem Kühlmedium in der Kühlerstruktur 61 statt, sodass das Gemisch G gekühlt wird. Das Brenngasgemisch verlässt das Wärmetauschervolumen der Größe V3 in abgekühlter Form bei einer Ladetemperatur T3 und einem Ladedruck p3 in Richtung einer Ladestrecke 33 zur Zuführung des Gemisches G zum Motor 10.

In einem Ansaugstreckenmodell wird der Zustand des Gemisches G vor dem Verdichter 51 vergleichsweise allgemein mittels der Zustandsgrößen für Druck und Temperatur angegeben, hier Ansaugtemperatur T1 und Ansaugdruck p1 vor dem Verdichter 51, bzw. nach dem Verdichter 51 bei erhöhtem Verdichtungsdruck p2 und erhöhter Verdichtungstemperatur T2 mit den Zustandsgrößen p2, T2 nach dem Verdichter 51, mittels einem geeigneten Verdichtermodell beschrieben; dies etwa nach einer Gaszustandsgleichung, wie z. B. für eine ideales oder reales Gas. Den folgenden Komponenten des Wärmetauschers 60 und des Receivers 80, wie etwa einem Krümmer und/oder einer Sammelstrecke zugeordnet, kommt als Großvolumina der Ansaugstrecke 30 nach dem Konzept der Erfindung besondere Bedeutung zu, sodass diesen und dem weiterem Raum der Ansaugstrecke zur Modellierung der weiteren Gaszustände ein Wärmetauschervolumen V3 bzw. ein Receivervolumen V5 im Ansaugstreckenmodell zugeordnet wird. Demnach nimmt das Brenngas-Gemisch G im Wärmetauschervolumen V3 die Zustandsgrößen p3, T3 an, dies infolge der Abkühlung und einer Volumenvergrößerung bei abnehmendem Ladedruck und Ladetemperatur p3, T3.

Der Zustand des Gemisches G im Bypass 70 bestimmt sich grundsätzlich ebenfalls nach Maßgabe der Zustandsgrößen p1, T1 eingangs bzw. p3, T3 ausgangs des Bypass 70 oder umgekehrt im Falle einer Rückströmung durch den Bypass 70; d. h. ein Bypass-Gasgemisch G_BP in der Bypass-Strecke 71 des Bypasses 70 stellt sich in Abhängigkeit der herrschenden Druckverhältnisse und der Stellung der Verdichter-Bypass-Drossel 72 --hier gemäß dem Stellwinkel aVBP der Verdichter-Bypass-Klappe-- ein. Die Bypass-Strecke 71 kann insbesondere zur Rückführung von überschüssigem Gemisch G vor den Verdichter 51 dienen, um dieses wieder verdichtet nochmals einer zur Verbrennung in den Zylindern Ai, Bi des Motors 10 zuzuführen.

Vor einer Zuführung des Gasgemisches G im Zustand p3, T3 zum Motor 10 wird dieses unter Änderung des Druckes und der Temperatur --nach Maßgabe des Receivervolumens V5 auf Receiverdruck p5 und Receivertemperatur T5-- nach Maßgabe eines über die Motor-Drossel 82 in das Receivervolumen 81 geführten Massenstroms m(')_DK in den Receiver 80 geführt. Vorliegend ist jeweils ein erstes und ein zweites Receivervolumen 81.B, 81.A einer B-Seite bzw. einer A-Seite des Motors 10 zugeordnet, d. h. diese sind strömungsaufwärtig vor den Zylindern Ai, Bi und nach der ersten und zweiten Ladestrecke 33.B, 33.A der B-Seite und A-Seite und nach dem Wärmetauschervolumen 62 angeordnet. Die Motor-Drossel 82 wird vorliegend über eine erste und eine zweite Motor-Drosselklappe 82.B, 82.A gebildet, die jeweils dem ersten und zweiten Receivervolumen 81.B, 81.A zugeordnet ist, wobei die erste und die zweite Motor-Drosselklappe 82.B, 82.A unabhängig voneinander einstellbar sind; im Folgenden wird auf diese, wo einfacher, zusammen unter der Motor-Drossel 82 Bezug genommen. Das Receivervolumen 81 ist als Summe des ersten und zweiten Receivervolumens 81.A und 81.B zu verstehen. In dem Receivervolumen 81 nimmt das Gemisch G infolge der Volumenvergrößerung und abhängig von der Stellung aDK der Motor-Drosselklappen 82.A, 82.B im Volumen V5 des Receivervolumens 81 die durch p5 und T5 gekennzeichneten Gaszustände ein; dies in Abhängigkeit des B-seitigen bzw. A-seitigen Massendurchsatzes m(')_DK, B bzw. m(')_DK, A je nach Stellung der Motor-Drosselklappen 82.B und 82.A.

Die durch pi, Ti, i=1,2 bzw. Vj, pj, Tj, j=3,5 gekennzeichneten Zustände des Gasgemisches G bestimmen sich also im Wesentlichen in den Bereichen wie sie durch den Verdichter 51, das Wärmetauschervolumen 62 und das Receivervolumen 81 gegeben sind, bzw. gegen die Grenzen, die durch die Motor-Drossel 82 und die Verdichter-Bypass-Drossel 72 bzw. den Verdichter 51 gegeben sind.

Es zeigt sich, dass Verbesserungsbedarf besteht bei einer Regelung zum Betrieb einer Brennkraftmaschine als eine Gas-Brennkraftmaschine 100 unter besonderer Berücksichtigung der Ansaugstrecke 30, die in Fig. 2 mit dem Gasmischer 40 und dem Verdichter 51 sowie in Fig. 3 mit dem Ladewärmetauscher 60 und Fig. 4 mit dem Receiver 80 im Ausschnitt näher dargestellt ist. Der Einfachheit halber werden im Folgenden für identische oder ähnliche Teile oder Teile identischer oder ähnlicher Funktion gleiche Bezugszeichen verwendet.

Es zeigt sich, dass die Einstellung der Massenströme m(')_G für Brenngas BG und m(')_LL für Ladeluft LL am Gasmischer 40 entsprechend einem Verbrennungsluftverhältnis LAMBDA_SOLL bzw. einem stöchiometrischem Luftverhältnis Lst nicht notwendigerweise unter Voraussetzung von stationären Bedingungen entlang der der Ansaugstrecke erfolgen kann. Das Konzept der Erfindung berücksichtigt in einem Ansaugstreckenmodell wie anhand von Fig. 1 beschrieben deshalb wenigstens zwei Großvolumina zur Zusammenfassung des Volumens der Ansaugstrecke, nämlich das Receivervolumen 80 und das Ladewärmetauschervolumen 62. Die Ansaugstrecke 30 wird im Rahmen des Ansaugstreckenmodells auf Basis der Befüll- und Entleermethode wie sie grundsätzlich bekannt ist modelliert. Die Zustandsänderungen in den Volumina werden vorliegend als quasi isotherm betrachtet. Dies vereinfacht das System durch Beschränkung auf Massenerhaltung gegenüber adiabater Betrachtungsweise und vereinfacht insbesondere eine simultane Rechnung der Brennkraftmaschine bzw. der Ansaugstrecke derselben in Echtzeit. Grundsätzlich kann jedoch auch eine adiabatische Betrachtungsweise bei genügender Rechenkapazität herangezogen werden, um die Zustandsänderungen in der Ansaugstrecke zu simulieren.

Außerdem werden spezielle Annahmen für Einrichtungen der Ansaugstrecke im Rahmen von Zusatzmodellen umgesetzt, insbesondere dann, wenn Messwerte zur entsprechenden Einrichtung der Ansaugstrecke 30 nicht zur Verfügung stehen. Dies betrifft zum Beispiel das Zusatzmodell eines Verdichters, das die Tätigkeit des Verdichters 51 und die Zustände des Gemisches G vor dem Verdichter über Temperatur und Druck (G(pl, T1)) und nach dem Verdichter (G(p2, T2)) beschreibt.

Fig. 2 verdeutlicht diesbezüglich weiter ergänzend die Gemischmassenströme m(') nach dem Gasmischer 40 für den Gemischanteil G(p1,T1), nämlich den Gemischmassenstrom m(')⁺_MISCHER,AUS. Dieser wird beispielsweise im stationären Betrieb bei geschlossener Verdichterbypassklappe 72 dem Verdichter 51 zugeführt. Dies erweist sich insbesondere als vorteilhaft zum Vorhalten bzw. Verbessern eines Lastaufschaltpotenzials des Motors 10.

Bei geöffneter Verdichterbypassklappe 72 kann auch eine Rückführung von überschüssigem Gasgemisch G vor den Verdichter 51 erfolgen; dies wird durch den rückgeführten Massenstrom m(')⁻⁻_VBP dargestellt. In diesem Zustand wird dem Verdichter 51 ein gesammelter Massenstrom m(')_MISCHER, AUS⁺ plus m(')_VBP zugeführt. Der den Verdichter 51 verlassende Massenstrom m(')_VERD entspricht einem Gemischzustand G (p2, T2) mit dem Gemischmassenstrom m(')_VERD. Auf dieser Basis lässt sich der SOLL-Gasmassenstrom aus dem Gemischmassenstrom, der den Gasmischer 40 verlässt, berechnen. Dazu kann eine Kontinuitätsgleichung für den Gemischmassenstrom an dem Knotenpunkt K1 angesetzt werden in der Form m(')_MISCHER, AUS = m(')VERD minus m(')_VBP.

Wie erläutert und in Fig. 2 gezeigt, kann es beim Abwurf hoher Lasten zum Rückstrom von Luft-Gas-Gemisch mit dem Gemischmassenstrom m(')_VBP aus dem Gasmischer 40 zur Luftseite hin kommen; diese Situation ist in Fig. 2 gestrichelt dargestellt. Zur Vermeidung von weiterer Anreicherung durch Brenngas G beim erneuten Ansaugen kann eine Speicherung der rückströmenden Gasmasse m(')⁻⁻_MISCHER,AUS in einem Speicher 41 erfolgen, der dem Gasmischer 40 zugeordnet ist. Der Speicher 41 kann auf sinnvolle Werte hinsichtlich seiner Größe begrenzt werden. In die Berechnung der Gemischmassenströme gehen der stöchiometrische Luftbedarf Lst und ein SOLL-Wert des Verbrennungsluftverhältnisses LAMBDA_SOLL ein. Die Umsetzung kann in einer Regeleinheit erfolgen, der ein entsprechendes Rechenmodul zugrunde gelegt ist.

Fig. 3 zeigt symbolisch ein Modell zur Darstellung einer Kontinuitätsgleichung für einen den Verdichter 51 verlassenden Gemischmassenstrom m(')_VERD zur Zuführung zum Ladeluftkühler LLK, der hier als Ladewärmetauscher 60 mit Tauschervolumen 62 dargestellt ist. Die Berechnung des Gemischmassenstroms, welcher durch den Verdichter 51 in das Behältervolumen zwischen Verdichteraustritt sowie Motor-Drossel 82.A, 82.B und Verdichterbypassklappe 72 strömt, ergibt sich nach Fig. 3 als zeitliche Änderung m(') = m(')VERD minus m(')DK minus m(')_VBP. Diese Kontinuitätsgleichung wie sie in Fig. 3 symbolisch am Knotenpunkt K2 dargestellt ist, kann unter Annahme bestimmter thermodynamischer Bedingungen wie beispielsweise einer konstanten Gemischzusammensetzung und isothermen Bedingungen oder adiabatischen Bedingungen gelöst werden.

Die Berechnung des Gemischmassenstroms, der über den Verdichterbypass 71 zurückströmt, lässt sich durch Ansetzen einer Durchflussfunktion beispielsweise für isentrope Strömungen angeben. Dazu kann der reduzierte Massenstrom m(')_VBP über die Durchflussfunktion der Verdichterbypassstrecke 71 als Kennfeld dargestellt werden. Die Zusammensetzung des Gemisches und die Kompressibilität kann dabei als annäherungsweise konstant angenommen werden. Ebenso kann die Berechnung von Druck und Temperatur im Ladeluftkühler LLK durch ein einfaches Druckverlustmodell für den Ladeluftkühler 61 erfolgen. Beispielsweise kann dazu die Annahme einer turbulenten oder weniger turbulenten Strömung unter Angabe einer geeigneten Reynoldszahl erfolgen und ein glattes Rohr nach Blasius angenommen werden.

Die Berechnung der Temperatur bei G (p2, T2) kann auf Basis eines Verdichterwirkungsgradkennfeldes umgesetzt werden. Die Kontinuitätsgleichung am Knotenpunkt K2 berücksichtigt in einem entsprechenden Rechenmodul einer Regeleinheit unter anderem auch die Klappenstellungen aDK und adVBP der Drosseln 72, 82 gemäß dem Konzept der Erfindung.

Weiter Bezug nehmend auf Fig. 4 ist die Möglichkeit der Berechnung des Gemischmassenstroms m(')_DK, welcher abhängig von der Drosselklappenstellung aDK der Motor-Drossel 82 vor dem Receiverrohr ist und dem Receivervolumen 80 zuströmt; bzw. dieses verlässt in Richtung der Zylinder m(')_ZYL. Dies kann einmal unter Berechnung des Gemischmassenstroms der durch die Motor-Drosselklappen 81.A, 81.B in die Receivervolumina 81.A, 81.B strömt gemäß einer Kontinuitätsgleichung für den Knotenpunkt K3 erfolgen, nämlich als zeitliche Änderung nach m(')_DK - m(')_ZYL, beispielsweise unter Annahme einer konstanten Gemischzusammensetzung und einer konstanten Temperatur (isotrope Bedingungen). Die Umsetzung am Knotenpunkt K3 kann jedoch auch im Rahmen einer Differenzengleichung erfolgen, wie nachfolgend erläutert anhand von Fig. 5.

Fig. 5 zeigt im Rahmen eines Flussdiagramms auch eine bevorzugte Ausführungsform einer Reglerstruktur einer Regelung 200 für eine Brennkraftmaschine, die insbesondere ausgebildet ist zu veranlassen, dass im Betrieb der Brennkraftmaschine eine Stellung der Motor-Drossel 82, d. h. der Klappen 82.A, 82.B, und/oder der Verdichterbypass-Drossel 72 zur Beeinflussung eines Gemischanteils des Gas-Luft-Gemisches. Dadurch kann eine zeitlich sachgerechte und der Dynamik eines Betriebs folgende Einstellung des Gemisch-Massenstroms m(')_DK zum Receiverrohr 80 bzw. des Gemisch-Massenstroms m(')_VBP über die Bypassstrecke 70 vor den Verdichter 51 in gegenseitiger Abhängigkeit erreicht werden; jedenfalls aber eine zeitlich vorteilhafte Einstellung des Gemisch-Massenstroms m(')_VBP nach dem Gemisch-Massenstroms m(')_DK zum Receiverrohr 80.

Ziel der Struktur des Reglers 200 ist die Regelung der Drosselklappen 82, 72, nämlich insbesondere die Regelung des aVBP nach Vorgabe des Stellwinkels aDK. Dazu wird der Gemisch-Massenstroms m(')_DK über die Motor-Drosselklappe simuliert auf zwei unterschiedlichen Zeitskalen. Jeweils abhängig davon wird der Gemisch-Massenstrom m(')_VBP über die Bypassstrecke 70 bestimmt; einmal auf einer schnelleren Zeitskala ausgehend von Ansteuerpfad SII und einmal auf einer langsameren Zeitskala ausgehend von Ansteuerpfad SI.

Dazu sieht die Struktur des Reglers 200 den ersten Ansteuerpfad SI und den zweiten Ansteuerpfad SII vor. In dem ersten Ansteuerpfad SI soll, insbesondere für einen stationären Betrieb, die Einstellung aVBP der Verdichterbypass-Drossel 72 in Abhängigkeit einer Einstellung aDK der Motor-Drossel 82 anhand einer ersten langsameren Zeitskala bestimmt werden. Gemäß dem zweiten Ansteuerpfad SII soll, insbesondere für einen transienten Betrieb, die Einstellung aVBP der Verdichterbypass-Drossel 72 in Abhängigkeit der Einstellung aDK der Motor-Drossel 82 anhand einer zweiten schnelleren Zeitskala bestimmt werden. Der erste bzw. zweite Ansteuerpfad SI, SII ist dazu zunächst ausgelegt, einen Massenstrom m(')_DK über die Motor-Drossel 82 einmal auf einer schnelleren Zeitskala mittels einer Durchflussgleichung der Regelstelle R45T und einmal auf einer langsameren Zeitskala mittels einer Befüll- und Entleermethode der Regelstelle R45S zu ermitteln.

Der erste für die langsamere Zeitskala zuständige Ansteuerpfad SI ist dazu ausgebildet die Einstellung der Motor-Drossel aDK bzw. einen Massenstrom über die Motor-Drossel 82 unter Bestimmung eines quasistationären Gemischmassenstroms für wenigstens das Receivervolumen 80 zu ermitteln. Dazu ist vorliegend eine Regeleinheit R4 zur Beschreibung einer Zylinderbefüllung an der Einrichtung E4 --vorliegend wie Fig. 1 zeigt zwischen einem Receivervolumen 80 und einem Zylinder Bi, Ai, i=1..8-- vorgesehen und eine weitere Regeleinheit R5 zur Modellierung des Receivervolumens 80; dies als vorliegend weitere Einrichtung E1 wie Fig. 1 zeigt. Die erste Regeleinheit R4 liefert einen Gemischmassenstrom m(')_ZYL zum Zylinder in etwa unter Berücksichtigung einer Kontinuitätsgleichung gemäß der Befüll- und Entleermethode wie dies in Fig. 4 dargestellt ist. Die weitere Regeleinheit R5 liefert den Gemischmassenstrom durch die Motor-Drossel 82 in das Receivervolumen 80 unter Berücksichtigung einer Kontinuitätsgleichung gemäß der Befüll- und Entleermethode für das Receiverrohr 80 ebenfalls gemäß Fig. 4.

Die Regeleinheit R4 setzt die Motordrehzahl nMOT und einen Druck p5 sowie eine Temperatur T5 im Receivervolumen 80 an und ermittelt über ein Luftaufwand-Kennfeld KF für den Luftaufwand eine Luftaufwandszahl LAMBDA_a. Abhängig von dieser Luftaufwandszahl LAMBDA_a ergibt sich der anzusetzende SOLL-Massenstrom in den Zylinder m(')_ZYL. Über die weitere Regeleinheit R5 ergibt sich die Änderung des quasi stationären Gemischmassenstroms für das Receivervolumen 80 in der beschriebenen Weise. Die beiden Größen können an dem Knotenpunkt K3, hier entsprechend der Regelstelle R45S, gemäß der oben beschriebenen Ansatzweise zur Ermittlung eines auf langsamerer Zeitskala anzusetzenden quasistationären Gemischmassenstroms m(')_DK, langsam über die Motor-Drossel 82 benutzt werden. Das Ergebnis wird einer Auswahlstelle 210 des Reglers 200 zugeführt.

Der erste Steuerpfad SI kann bei Bedarf auch in aufwendigerer Weise die Aufladung modellieren; etwa wenn die Aufladung mit einem Ladewärmetauscher, vorzugsweise in Form einer ein- oder zweistufigen Aufladung, vorzugsweise mit einer Abgasrückführung, versehen ist. So kann beispielsweise das Ansaugstreckenmodell wenigstens ein Gemischmassenstrom und/oder Zustand des Gemischanteils im Receivervolumen und/oder des Ladewärmertauschers 61 und/oder der Bypassstrecke 71 berücksichtigen. Dazu können weitere hier nicht gezeigte Regeleinheiten, z. B. eine Regeleinheit R3 für eine Einrichtung E2 unter Nutzung der Befüll-/Entleermethode für den Ladewärmertauscher 60 vorgesehen sein.

Für einen transienten Betriebszustand dagegen, sieht der Regler 200 eine Regelstelle R45T vor, die --anders als die für eine quasistationäre Betriebssimulation ausgelegte Regelstelle R45S-- einen transienten Betrieb im Rahmen einer Durchflussgleichung unter Berücksichtigung einer Drosselklappenstellung aDK des Modells, wie es in Fig. 3 dargestellt ist, löst. Dazu wird ein transienter Gemischmassenstrom m(')_DK_schnell über die Motor-Drossel 82 im Rahmen einer Lösung der Durchflussgleichung --über Differenzschritte (mit endlicher Schrittrate) oder in einer differentiellen Lösung (mit inifitesimalen Schritten)-- gefunden; berücksichtigt werden der thermodynamische Zustand p3, T3 des Gemisches G im Ladewärmertauscher 60 bzw. der thermodynamische Zustand p5, T5 im Receivervolumen 80.

Anders ausgedrückt kann der Gemischmassenstrom m(')_DK_schnell über die Motor-Drossel 82 unter Berücksichtigung der räumlichen Aspekte des Ansaugstreckenmodells in Zeitschritten zeitlich transient gelöst werden. Die Zeitschritte können endlich sein (Differenzgleichung) oder infinitesimal klein (Differenzialgleichung). Diese mit höherem Rechenaufwand verbundene Ermittlung des Gemischmassenstrom m(')_DK, schnell über die Motor-Drossel 82 erfolgt in dem zweiten Zweig SII des Reglers 200 und wird ebenfalls der Auswahlstelle 210 des Reglers 200 zugeführt. Die sogenannte Abtastrate 1/TS (endlich oder infinitesimal klein) zur differentiellen Lösung der Durchflussgleichung kann je nach Bedarf eingestellt werden. Die Anzahl der Zeitschritte TS über die Differenzen oder Mittelwerte sollte einerseits so groß sein, dass das Rauschen minimiert wird. Dann sollte die Anzahl der Zeitschritte TS so klein wie nötig sein, um ein möglichst schnelles Ansprechverhalten der Drosselklappe 82 in Echtzeit im Rahmen der verfügbaren Rechenkapazität darstellen zu können .

Die Auswahlstelle 210 kann dazu ausgelegt sein, auf einen bestimmten Betriebszustand abzustellen. Dazu kann beispielsweise die Auswahlstelle 210 eine binäre Schaltereinheit umfassen, die auf einen Betrieb erkennt, wenn die Drosselklappe 82 ganz oder teilweise, insbesondere vollständig, geöffnet ist (DK=1); insbesondere dann macht auch die Auswahl einer transienten Berechnungsmethode Sinn. Wenn andererseits die Drosselklappe 82 vollständig geschlossen ist (DK=0) kann dies einen Zustand betreffen, in dem die Drosselklappe schließt oder geschlossen ist und eine weitere Berechnung von einem transienten Betriebszustand zugeordneten Werten m.E. nicht sinnvoll ist.

Außerdem kann die Auswahlstelle 210 dazu ausgelegt sein, bereits auf eine Betriebsart eines stationären oder transienten Betriebs zu erkennen; die etwa auf einen transienten Betrieb erkennt, wenn die Drosselklappe 82 nur teilweise geöffnet ist.

In einer Differenzbildungseinheit 220 ist dann vorgesehen, dass ein Differenzwert Δ (in Fig.2 der Zeichnung) z. B. eines Massenstroms Δm(')_DK oder eines damit verbundenen Druckwerts Δp über eine Zeitspanne und/oder zur gleichen Zeit über die Motor-Drossel 82 (Δ =p5-p3) gebildet wird. Anhand des Differenzwertes Δ kann auf eine stationäre bzw. transiente Betriebsart der Brennkraftmaschine 100 geschlossen werden. Etwa wenn der Differenzwert Δ eine bestimmte Größe überschreitet kann auf eine transiente Betriebsart geschlossen werden bzw. wenn der Differenzwert Δ eine bestimmte Größe unterschreitet kann auf eine stationäre Betriebsart geschlossen werden.

In einer Logikeinheit 230 des Reglers kann dann vorgesehen sein unter "1", zu prüfen ob der Differenzwert Δ (z. B. ein Differenzdruck Δ = p5 - p3) oder ein Differenzmassenstrom m(')_DK oberhalb eines Grenzwertes liegt. Es kann in der Logikeinheit 230 auch geprüft werden, ob der Differenzwert Δ einen Vorzeichenwechsel durchläuft oder durchlaufen hat innerhalb einer bestimmten Zeitspanne. Diese Ermittlung erfolgt bevorzugt abhängig vom Auswahlsignal der Auswahlstelle 210; d. h. bevorzugt wird ein Differenzwert ΔS oder ΔT gebildet, entweder für eine quasistationäre Größe m(')_DK_langsam oder für eine transiente Größe m(')_DK, schnell. Infolge einer so angepassten Zeitskala wird insbesondere ein Schwingen oder eine zu langsame Regeldynamik vermieden.

Soweit nicht in einer weiteren Regeleinheit 240 auf ein Schließen der Bypassstrecke 71 durch Schließen der Verdichterbypass-Drossel 72 zu erkennen ist (VBP=0), so kann in einem weiteren Schritt ein Gemischmassenstrom m(')_VBP,SOLL angegeben werden durch Lösung des in Fig. 3 dargestellten Kontinuitätsstroms; d. h. wenn (VBP=1) in der Regeleinheit 240 anliegt.

Vorteil der in Fig. 5 gezeigten Struktur eines Reglers 200 ist, dass abhängig von einer Auswahl in der Auswahlstelle 210 im stationären Betrieb mittels m(')_DK_langsam ein vergleichsweise genaues Signal von m(')_VBP,SOLL ermittelbar ist. Dies wird mittels dem Ansaugstreckenmodell umgesetzt, das im stationären Betrieb auch der Zeitentwicklung im realen System der Brennkraftmaschine 100 entspricht.

Ist aber z. B. infolge des Auswahlsignals (DK=1) ein transienter Betrieb der Brennkraftmaschine angezeigt, und bestätigt sich dies insbesondere durch die Differenzbildung in der Reglerstelle 220, so kann über den SOLL-Massenstrom über die Verdichterbypassklappe 72 vergleichsweise schnell die Drosselklappenstellung aVBP abhängig von der Motorklappenstellung aDK vorgegeben werden. Dies führt zu einer praktisch synchron veranlassbaren Reaktion der Bypassstrecke 71 auf die Motor-Drossel 82.

In dem Fall einer Auswahl DK=1 kann dann aus dem SOLL-Wert einer Verdichterbypassstellung aVBP und den Gemischzuständen P3, T3 im Ladewärmetauscher 60 bzw. p1, T1 vor den Verdichter 51 in der Regeleinheit R1 unter Nutzung einer Drosselgleichung auf die Stellung einer Verdichterbypass-Drossel aVBP,transient geschlossen werden. Auch dies erfolgt im Rahmen der in Fig. 3 dargestellten Kontinuitätsgleichung und/oder unter Berücksichtigung der Befüll- und Entleermethode; in diesem vorliegenden Fall sind m(')_VERD, m(')_DK und m(')_VBP relevant. Anders ausgedrückt kann die in der Regeleinheit R1 hinterlegte Drosselgleichung für die Verdichterbypass-Drossel 72 entweder in Abhängigkeit eines quasistationär langsameren Massenstroms über die Motor-Drossel 82 (Ansteuerweg SI) erfolgen oder aber in Abhängigkeit eines vergleichsweise schnellen Signals eines Gemischmassenstroms über die Motor-Drossel 82 aus einem zweiten Pfad SII. Im ersten Fall ergibt sich eine vergleichsweise genaue Einstellung aVBP der Bypass-Drossel 72. Im zweiten Fall ergibt sich eine sehr schnell auf die Stellung aDK der Motor-Drossel 82 reagierende Einstellung aVBP, transient der Bypass-Drossel 72.

So ist insbesondere in letzterem Fall vermieden, dass es beim Schließen der Motor-Drossel 82 zu einem Verdichterpumpen kommt, wenn der Verdichter 51 des Abgasturboladers durch eine schnelle Verringerung des durch ihn geförderten Gasmassenstroms m(')_VERD kurzzeitig außerhalb seines Betriebsbereichs betrieben wird. Durch das schnelle --im Rahmen der hier dargestellten Struktur des Reglers 200 garantierte-- Öffnen der Verdichterbypassklappe 72 kann das Pumpen vermieden werden; nämlich da der Verdichterbypassmassenstrom m(')_VBP bei geschlossener Motor-Drossel 82 ein schnelles Abführen des Drucks p3 über die Bypassstrecke 71 ermöglicht.

Andererseits kann das Lastaufschaltpotenzial eines Gasmotors 100 durch Schließen der Verdichterbypassklappe 72 verbessert werden, wenn diese beispielsweise in quasi stationärem Betrieb (m(')_DK_langsam) geöffnet war (DK=0 in der Auswahlstelle 210). Die Erforderlichkeit einer Einstellung der Bypass-Drossel 72 ergibt sich aus der Abfolge der Differenzstelle 220 und der Logikstelle 230 im Regler 200; eine Aktion der Bypass-Drossel 72 erfolgt nur bei nicht geschlossener Stellung und wenn Drücke oder Vorzeichen gravierenden Änderungen unterliegen.

Als Beispiel sei ein Massenstrom m(')_DK über die Motor-Drossel 82 für unterschiedliche Größen von Abtastraten TS bei der Lösung der Durchflussgleichung in der Regeleinheit R45T genannt. Eine erste eher flach ausfallende Lösung für eine Abtastrate TS_groß, (mit vergleichsweise großen Schritten) dürfte praktisch das Ergebnis einer quasistationären Gemisch-Massenstrom-Entwicklung wiedergeben. Die zweite Möglichkeit ist, dass die Abtastrate zu groß (mit vergleichsweise kleinen Schritten) gewählt wurde; in dem Fall würde der Regler 200 als System zu schnell reagieren. Das würde zu einer stark variierenden Reglereinstellung führen, die den realen Betrieb nicht verlässlich wiedergeben dürfte, insbesondere mit zu steilen und zu stark fluktuierenden Gradienten.

Ist dagegen die Wahl der Abtastrate etwa im Bereich einer Zeitskala einer tatsächlichen transienten Entwicklung, wird genau der Gemischmassenstrom über die Drosselklappe 82 im Rahmen eines zweiten Steuerzweigs SII wiedergegeben. In dem Fall kann praktisch eine synchrone Reaktion des Bypasses 70 erfolgen, wenn die Auswahlstelle 210 auf eine transiente Beurteilung der Lage schließt.

## Patentansprüche

1. Verfahren zum Betrieb einer Brennkraftmaschine, insbesondere zur Lastregelung und/oder Laststeuerung bei der Brennkraftmaschine, die aufweist:
- eine Ansaugstrecke (30) und einen Motor 10) mit einer Anzahl von Zylindern (Ai, Bi) und einem strömungsaufwärts vor den Zylindern (Ai, Bi) angeordnetem Receiver (80), wobei
die Ansaugstrecke (30) aufweist:
- eine Aufladung mit einem Verdichter (51) und einen Bypass zur Umgehung der Aufladung, und wobei
- dem Receiver (80) eine Motor-Drossel (DK) und dem Bypass eine Verdichterbypass-Drossel (VBP) zugeordnet ist; und
in dem Verfahren eine Stellung der Motor-Drossel (DK) und/oder der Verdichterbypass-Drossel (VDPK) betriebsabhängig eingestellt wird zur Beeinflussung eines Ladefluids, **dadurch gekennzeichnet, dass**
der Ansaugstrecke (30) ein Ansaugstreckenmodell zugeordnet wird, mittels dem wenigstens ein Massenstrom und/oder Zustand des Ladefluids vor dem Motor (10) auf einer ersten langsameren Zeitskala und auf einer zweiten schnelleren Zeitskala bestimmt wird, und basierend auf dem Bestim mungsergebnis
- die Verdichterbypass-Drossel (VDBK) in Abhängigkeit von der Motor-Drossel (DK) eingestellt wird.

2. Verfahren nach Anspruch 1, **dadurch gekennzeichnet, dass** der Massenstrom, ein Gemisch-Massenstrom, und der Zustand ein Gemisch-Zustand ist.

3. Verfahren nach Anspruch 1, **dadurch gekennzeichnet, dass** die Verdichterbypass-Drossel (VDBK) in Abhängigkeit der Motor-Drossel (DK) auf der ersten langsameren Zeitskala eingestellt wird,
- unter Bestimmung eines quasistationären Gemisch-Massenstroms für wenigstens das Receivervolumen (81) und/oder unter Bestimmung eines quasistationären Gemisch-Massenstroms für den Wärmetauscher (60) mittels einer Befüll- und Entleermethode für das Receivervolumen (81) und/oder den Wärmetauscher (60) .

4. Verfahren nach einem der Ansprüche 1 bis 3, **dadurch gekennzeichnet, dass** die Verdichterbypass-Drossel (VDBK) in Abhängigkeit der Motor-Drossel (DK) auf der zweiten schnelleren Zeitskala eingestellt wird,
- unter Bestimmung eines transienten Gemisch-Massenstroms für die Motor-Drossel (DK) mittels wenigstens einer zeitabhängigen Durchflussgleichung für die Motor-Drossel (DK), insbesondere unter Berücksichtigung einer zeitabhängigen Durchflussgleichung für die Verdichterbypass-Drossel (VDBK) .

5. Verfahren nach Anspruch 1, **dadurch gekennzeichnet, dass** die Verdichterbypass-Drossel (VDBK) in Abhängigkeit der Motor-Drossel (DK) in Echtzeit und/oder simultan, für den ersten Fall einer ersten langsameren Zeitskala und/oder den zweiten Fall einer zweiten schnelleren Zeitskala, bestimmt wird.

6. Verfahren nach Anspruch 1, **dadurch gekennzeichnet, dass** die Verdichterbypass-Drossel (VDBK) in einer Abhängigkeit von der Motor-Drossel (DK) eingestellt wird wahlweise auf Grundlage einer ersten langsameren Zeitskala, insbesondere für einen stationären Betrieb die Verdichterbypass-Drossel (VDBK), oder einer zweiten schnelleren Zeitskala, insbesondere für einen transienten Betrieb der Verdichterbypass-Drossel (VDBK), wobei eine Betriebsart eines stationären oder eines transienten Betriebs ausgewählt wird indem wenigstens ein Differenzwert über die Motor-Drossel (DK) betreffend den Gemisch-Massenstrom und/oder den Gemisch-Zustand des Gemischanteils gebildet wird..

7. Verfahren nach Anspruch 1, **dadurch gekennzeichnet, dass** zur Einstellung der Motor-Drossel berücksichtigt wird auf der ersten und/oder der zweiten Zeitskala:
- ein Gemisch-Massenstrom über die Motor-Drossel (DK), und/oder
- ein Gemisch-Zustand in dem Receiver (80).

8. Verfahren nach einem der vorhergehenden Ansprüche, **dadurch gekennzeichnet, dass**, insbesondere im Rahmen einer simultanen Echtzeitbestimmung, mittels dem als Basis eines Rechenmodells für die Ansaugstrecke (30) dienenden Ansaugstreckenmodell in einer Regelung
- wenigstens ein einem früheren Gemischzustand zugeordneter Eingabe-Gemischanteil des Gas-Luft-Gemisches gebildet wird mittels einem wenigstens einem späteren Gemischzustand zugeordneten Ausgabe-Gemischanteil des Gas-Luft-Gemisches.

9. Verfahren nach einem der vorhergehenden Ansprüche, **dadurch gekennzeichnet, dass** mittels dem Ansaugstreckenmodell
- wenigstens ein Gemisch-Massenstrom über wenigstens eine Motor-Drossel (DK) und über wenigstens eine Verdichterbypass-Drossel (VDBK) und/oder
- ein Gemisch-Zustand des Gemischanteils in wenigstens einem Receivervolumen (81) und wenigstens einem weiteren Großvolumen der Ansaugstrecke (30), nämlich das eines Lade-Wärmetauschers (60) und/oder einer Bypass-Strecke und/oder eines Verdichters (51), bestimmt wird.

10. Verfahren nach einem der vorhergehenden Ansprüche, **dadurch gekennzeichnet, dass** anhand eines Differenzwerts einer Massenstrom-Differenz und/oder einer Druckdifferenz oder sonstigen Gemisch-Zustands über die Motor-Drossel (DK) auf eine der Betriebsarten eines stationären oder eines transienten Betriebs erkannt wird, wobei
- auf die Betriebsart des transienten Betriebs erkannt wird wenn der Differenzwert, oberhalb eines ersten Grenzwerts (GW) liegt und/oder einen Vorzeichenwechsel aufweist,
- auf eine Betriebsart des stationären Betriebs erkannt wird wenn der Differenzwert, unterhalb eines zweiten Grenzwerts (GW) liegt und/oder keinen Vorzeichenwechsel aufweist.

11. Verfahren nach einem der vorhergehenden Ansprüche, **dadurch gekennzeichnet, dass** Rechenergebnisse auf einer ersten langsameren Zeitskala betreffend den stationären Betrieb, und Rechenergebnisse auf einer zweiten schnelleren Zeitskala betreffend den transienten Betrieb miteinander in Beziehung gesetzt werden, insbesondere zur Erkennung eines stationären und/oder eins transienten Betriebs.

12. Verfahren nach einem der vorhergehenden Ansprüche, **dadurch gekennzeichnet, dass** im Falle eines stationären Betriebs der Brennkraftmaschine die Koeffizienten einer zeitabhängigen Durchflussgleichung skaliert werden mittels Vergleich von Rechenergebnisse betreffend eine erste langsamere Zeitskala basierend auf einer Befüll- und Entleermethode einerseits und Rechenergebnissen betreffend eine zweite schnellere Zeitskala basierend auf einer Durchflussgleichung andererseits.

13. Verfahren nach einem der vorhergehenden Ansprüche, **dadurch gekennzeichnet, dass** der Motor-Drossel (DK) ein erstes Drosselkennfeld und/oder der Verdichterbypass-Drossel (VDPK) ein zweites Drosselkennfeld zugeordnet ist, wobei
- das erste und/oder zweite Drosselkennfeld jeweils einen quasistationären Massenstrom angibt
- in einer ersten Abhängigkeit von einem Druck vor und/oder nach der Drossel, und/oder
- in einer zweiten Abhängigkeit von einer Drosselstellung.

14. Regelungsvorrichtung für eine Brennkraftmaschine (100), insbesondere eine Gas-Brennkraftmaschine, die aufweist:
- eine Ansaugstrecke (30) und einen Motor (10) mit einer Anzahl von Zylindern (Ai, Bi) und einem strömungsaufwärts vor den Zylindern (Ai, Bi) angeordnetem Receiver (80), wobei
die Ansaugstrecke (30) aufweist:
- eine Aufladung mit einem Verdichter (51) und einen Bypass zur Umgehung der Aufladung, wobei
- dem Receiver (80) eine Motor-Drossel (DK) und dem Bypass eine Verdichterbypass-Drossel (VBP) zugeordnet ist; und wobei
- mittels der Regelungsvorrichtung eine Stellung der Motor-Drossel (DK) und/oder der Verdichterbypass-Drossel (VDPK) zur Beeinflussung eines Ladefluids, insbesondere eines Gemischanteils des Gas-Luft-Gemisches, betriebsabhängig einstellbar ist, **dadurch gekennzeichnet, dass**
- in der Regelungsvorrichtung der Ansaugstrecke (30) ein Ansaugstreckenmodell zugeordnet ist, mittels dem wenigstens ein Gemisch-Massenstrom und/oder Gemisch-Zustand des Gemischanteils vor dem Motor (10) auf der ersten langsameren Zeitskala und der zweiten schnelleren Zeitskala bestimmt wird, und basierend auf einem Bestimmungsergebnis,
- mittels der Regelung die Verdichterbypass-Drossel (VDBK) in einer Abhängigkeit von der Motor-Drossel (DK) eingestellt wird.

15. Regelungsvorrichtung nach Anspruch 14, **dadurch gekennzeichnet, dass** die Regelungsvorrichtung weiter ausgebildet ist:
- den Gemisch-Massenstrom und/oder den Gemisch-Zustand des Gemischanteils in Echtzeit und/oder simultan zu bestimmen, und
- zu veranlassen, dass die Verdichterbypass-Drossel (VDBK) in einer Abhängigkeit von der Motor-Drossel (DK) eingestellt wird wahlweise auf Grundlage einer der Zeitskalen.

16. Brennkraftmaschine (100), insbesondere als eine Gas-Brennkraftmaschine, die aufweist:
- eine Ansaugstrecke (30) und einen Motor (10) mit einer Anzahl von Zylindern (Ai, Bi) und einem strömungsaufwärts vor den Zylindern (Ai, Bi) angeordnetem Receiver (80), wobei
die Ansaugstrecke (30) aufweist:
- eine Aufladung mit einem Verdichter (51) und einen Bypass zur Umgehung der Aufladung, wobei
- dem Receiver (80) eine Motor-Drossel (DK) und dem Bypass eine Verdichterbypass-Drossel (VBP) zugeordnet ist; und
- eine Regelungsvorrichtung nach Anspruch 14 oder 15.

17. Brennkraftmaschine (100) nach Anspruch 16 **dadurch gekennzeichnet, dass**
- die Brennkraftmaschine in Form einer Gas-Brennkraftmaschine (100) gebildet ist, insbesondere in Form einer Gas-Brennkraftmaschine (100) mit einem Gasmischer (40); und/oder
- die Brennkraftmaschine in Form einer Dual-Fuel-Brennkraftmaschine (100) gebildet ist, insbesondere in Form einer Dual-Fuel-Brennkraftmaschine (100) mit einem Einspritzsystem für Flüssigbrennstoff.

## Claims

1. Method for operating an internal combustion engine, in particular for load regulation and/or load control in the internal combustion engine, which has:
- an intake path (30) and an engine (10) having a number of cylinders (Ai, Bi) and a receiver (80) which is arranged upstream of the cylinders (Ai, Bi), wherein
the intake path (30) has:
- a charge having a compressor (51) and a bypass for bypassing the charge, and wherein
- an engine throttle (DK) is associated with the receiver (80) and a compressor bypass throttle (VP) is associated with the bypass; and
in the method, a position of the engine throttle (DK) and/or the compressor bypass throttle (VDPK) is adjusted in accordance with the operation in order to influence a charge fluid, **characterised in that**
- there is associated with the intake path (30) an intake path model,
by means of which at least one mass flow and/or state of the charge fluid upstream of the engine (10) is determined on a first slower timescale and on a second more rapid timescale, and, based on the determination result,
- the compressor bypass throttle (VDBK) is adjusted in accordance with the engine throttle (DK).

2. Method according to claim 1, **characterised in that** the mass flow is a mixed mass flow and the state is a mixed state.

3. Method according to claim 1, **characterised in that** the compressor bypass throttle (VDBK) is adjusted in accordance with the engine throttle (DK) on the first slower timescale,
- by determining a quasi-stationary mixed mass flow for at least the receiver volume (81) and/or by determining a quasi-stationary mixed mass flow for the heat exchanger (60) by means of a filling and emptying method for the receiving volume (81) and/or the heat exchanger (60).

4. Method according to any one of claims 1 to 3, **characterised in that** the compressor bypass throttle (VDBK) is adjusted in accordance with the engine throttle (DK) on the second more repaid timescale,
- with a transient mixed mass flow being determined for the engine throttle (DK), by means of at least one time-dependent throughflow equation for the engine throttle (DK), in particular taking into account a time-dependent throughflow equation for the compressor bypass throttle (VDBK).

5. Method according to claim 1, **characterised in that** the compressor bypass throttle (VDBK) is determined in accordance with the engine throttle (DK) in real time and/or simultaneously, for the first case of a first slower timescale and/or the second case of a second more rapid timescale.

6. Method according to claim 1, **characterised in that** the compressor bypass throttle (VDBK) is adjusted in accordance with the engine throttle (DK) selectively based on a first slower timescale, in particular for stationary operation of the compressor bypass throttle (VDBK), or a second more rapid timescale, in particular for transient operation of the compressor bypass throttle (VDBK), wherein an operating mode of a stationary or a transient operation is selected by at least one differential value concerning the engine throttle (DK) relating to the mixed mass flow and/or the mixed state of the mixture portion being formed.

7. Method according to claim 1, **characterised in that**, in order to adjust the engine throttle, there is taken into account on the first and/or second timescale:
- a mixed mass flow via the engine throttle (DK), and/or
- a mixed state in the receiver (80).

8. Method according to any one of the preceding claims, **characterised in that** in particular in the context of a simultaneous real-time determination, by means of the intake path model which acts as a basis of a calculation model for the intake path (30) in a control operation,
- at least one input mixture portion, which is associated with an earlier mixed state, of the gas/air mixture is formed by means of an output mixture portion, which is associated with at least one subsequent mixed state, of the gas/air mixture.

9. Method according to any one of the preceding claims, **characterised in that** by means of the intake path model
- at least one mixed mass flow via at least one engine throttle (DK) and via at least one compressor bypass throttle (VDBK) and/or
- a mixed state of the mixture portion in at least one receiver volume (18) and at least one additional large volume of the intake path (30), that is to say, that of a charge heat-exchanger (60) and/or a bypass path and/or a compressor (51), is determined.

10. Method according to any one of the preceding claims, **characterised in that** with reference to a differential value of a mass flow difference and/or a pressure difference or other mixed state via the engine throttle (DK), one of the operating modes of a stationary or a transient operation is identified, wherein
- the operating mode of the transient operation is identified when the differential value is above a first limit value (GW) and/or a has a change of sign,
- an operating mode of the stationary operation is identified when the differential value is below a second limit value (GW) and/or does not have any change of sign.

11. Method according to any one of the preceding claims, **characterised in that** calculation results on a first slower timescale relating to stationary operation and calculation results on a second more rapid timescale relating to transient operation are correlated with each other, in particular in order to identify stationary and/or transient operation.

12. Method according to any one of the preceding claims, **characterised in that**, in the case of stationary operation of the internal combustion engine, the coefficients of a time-dependent throughflow equation are scaled by means of comparison of calculation results relating to a first slower timescale based on a filling and emptying method, on the one hand, and calculation results relating to a second more rapid timescale based on a throughflow equation, on the other hand.

13. Method according to any one of the preceding claims, **characterised in that** a first throttle characteristic diagram is associated with the engine throttle (DK) and/or a second throttle characteristic diagram is associated with the compressor bypass throttle (VDPK), wherein
- the first and/or second throttle characteristic diagram in each case indicates a quasi-stationary mass flow,
- in a first dependency on a pressure upstream and/or downstream of the throttle, and/or
- in a second dependency on a throttle position.

14. Control device for an internal combustion engine (100), in particular a gas combustion engine, which has:
- an intake path (30) and an engine (10) having a number of cylinders (Ai, Bi) and a receiver (80) which is arranged upstream of the cylinders (Ai, Bi), wherein
the intake path (30) has:
- a load with a compressor (51) and a bypass for bypassing the charge, wherein
- an engine throttle (DK) is associated with the receiver (80) and a compressor bypass throttle (VBP) is associated with the bypass; and wherein
- by means of the control device, a position of the engine throttle (DK) and/or the compressor bypass throttle (VDPK) can be adjusted in accordance with the operation in order to influence a charge fluid, in particular a mixture portion of the gas/air mixture,
**characterised in that**
- in the control device there is associated with the intake path (30) an intake path model, by means of which at least one mixed mass flow and/or mixed state of the mixture portion upstream of the engine (10) is determined on the first slower timescale and the second more rapid timescale, and based on a determination result,
- by means of the control, the compressor bypass throttle (VDBK) is adjusted in accordance with the engine throttle (DK) .

15. Control device according to claim 14, **characterised in that** the control device is further constructed:
- to determine the mixed mass flow and/or the mixed state of the mixture portion in real time and/or simultaneously, and
- to cause the compressor bypass throttle (VDBK) to be adjusted in accordance with the engine throttle (DK), selectively based on one of the timescales.

16. Internal combustion engine (100), in particular as a gas combustion engine, which has:
- an intake path (30) and an engine (10) having a number of cylinders (Ai, Bi) and a receiver (80) which is arranged upstream of the cylinders (Ai, Bi), wherein
the intake path (30) has:
- a charge having a compressor (51) and a bypass for bypassing the charge, wherein
- an engine throttle (DK) is associated with the receiver (80) and a compressor bypass throttle (VBP) is associated with the bypass; and
- a control device according to claim 14 or claim 15.

17. Internal combustion engine (100) according to claim 16, **characterised in that**
- the internal combustion engine is formed in the form of a gas combustion engine (100), in particular in the form of a gas combustion engine (100) having a gas mixer (40); and/or
- the internal combustion engine is formed in the form of a dual-fuel internal combustion engine (100), in particular in the form of a dual-fuel internal combustion engine (100) having an injection system for liquefied fuel.

## Revendications

1. Procédé de commande d'un moteur à combustion interne, plus particulièrement pour la régulation de la charge et/ou le contrôle de la charge pour le moteur à combustion interne, qui comprend :
- une portion d'aspiration (30) et un moteur (10) avec un nombre de cylindres (Ai, Bi) et un récepteur (80) disposé en amont avant les cylindres (Ai, Bi), dans lequel
la portion d'aspiration (30) comprend :
- une charge avec un compresseur (51) et une dérivation pour le contournement de la charge et dans lequel
- au récepteur (80) correspond un papillon de moteur (DK) et à la dérivation correspond un papillon de dérivation de compresseur (VBP) ; et
dans le procédé, une position de la bobine de moteur (DK) et/ou de la bobine de dérivation de compresseur (VBP) est réglée en fonction de la commande pour le contrôle d'un fluide de charge, **caractérisé en ce que**
à la portion d'aspiration (30) correspond un modèle de portion d'aspiration au moyen duquel au moins un débit massique et/ou un état du fluide de charge avant le moteur (10) est déterminé sur une première échelle de temps plus lente et une deuxième échelle de temps plus rapide et, sur la base du résultat de détermination
- le papillon de dérivation du compresseur (VDBK) est réglé en fonction du papillon du moteur (DK).

2. Procédé selon la revendication 1, **caractérisé en ce que** le débit massique, un débit massique de mélange et l'état est un état de mélange.

3. Procédé selon la revendication 1, **caractérisé en ce que** le papillon de dérivation du compresseur (VDBK) est réglé en fonction du papillon de moteur (VK) sur la première échelle de temps plus lente,
- en déterminant un débit massique de mélange quasi stationnaire pour au moins le volume du récepteur (81) et/ou en déterminant un débit massique de mélange quasi stationnaire pour l'échangeur de chaleur (60) au moyen d'un procédé de remplissage et de vidange pour le volume du récepteur (81) et/ou l'échangeur de chaleur (60).

4. Procédé selon l'une des revendications 1 à 3, **caractérisé en ce que** le papillon de dérivation du compresseur (VDBK) est réglé en fonction du papillon de moteur (DK) sur la deuxième échelle de temps plus rapide,
- en déterminant un débit massique de mélange transitoire pour le papillon de moteur (DK) au moyen d'au moins une équation de débit en fonction du temps pour le papillon de moteur (DK), plus particulièrement en tenant compte d'une équation de débit en fonction du temps pour le papillon de dérivation du compresseur (VDBK).

5. Procédé selon la revendication 1, **caractérisé en ce que** le papillon de dérivation du compresseur (VDBK) est déterminé en fonction du papillon de moteur (DK) en temps réel et/ou simultanément, pour le premier cas selon une première échelle de temps plus lentte et/ou le deuxième cas selon une échelle de temps plus rapide.

6. Procédé selon la revendication 1, **caractérisé en ce que** le papillon de dérivation du compresseur (VDBK) est réglé en fonction du papillon de moteur (DK) au choix sur la base d'une échelle de temps plus lente, plus particulièrement pour un fonctionnement stationnaire du papillon de dérivation du compresseur (VDBK), ou sur la base d'une deuxième échelle de temps plus rapide, plus particulièrement pour un fonctionnement transitoire du papillon de dérivation du compresseur (VDBK), dans lequel un mode de fonctionnement d'un fonctionnement stationnaire ou transitoire est sélectionné en calculant au moins une valeur de différence sur le papillon du moteur (DK) concernant le débit massique du mélange et/ou l'état du mélange de la part de mélange.

7. Procédé selon la revendication 1, **caractérisé en ce que**, pour le réglage du papillon du moteur, est pris en compte, sur la première et/ou la deuxième échelle de temps :
- un débit massique de mélange sur le papillon de moteur (DK) et/ou
- un état du mélange dans le récepteur (80).

8. Procédé selon l'une des revendications précédentes, **caractérisé en ce que**, plus particulièrement dans le cadre d'une détermination en temps réel simultanée, au moyen du modèle de portion d'aspiration servant de base d'un modèle de calcul pour la portion d'aspiration (30), dans une régulation
- au moins une part de mélange d'entrée du mélange gaz-air correspondant à un état de mélange antérieur est formée au moyen d'une part de mélange de sortie du mélange gaz-air correspondant à un état de mélange postérieur.

9. Procédé selon l'une des revendications précédentes, **caractérisé en ce que**, au moyen du modèle de portion d'aspiration
- au moins un débit massique sur au moins un papillon de moteur (DK) etsur au moins un papillon de dérivation du compresseur (VDBK) et/ou
- un état de mélange de la part de mélange dans au moins un volume de récepteur (81) et au moins un autre grand volume de la portion d'aspiration (30), à savoir celui d'un échangeur de chaleur de charge (60) et/ou d'une portion de dérivation et/ou d'un compresseur (51), est déterminée.

10. Procédé selon l'une des revendications précédentes, **caractérisé en ce que**, à l'aide d'une valeur de différence d'une différence de débit massique et/ou d'une différence de pression ou d'un autre état du mélange sur le papillon de moteur (DK), est détecté un des modes de fonctionnement d'un fonctionnement stationnaire ou d'un fonctionnement transitoire, dans lequel
- le mode de fonctionnement du fonctionnement transitoire est détecté lorsque la valeur de différence se trouve au-dessus d'une première valeur limite (GW) et/ou présente un changement de signe,
- le mode de fonctionnement du fonctionnement stationnaire est détecté lorsque la valeur de différence se trouve en dessous d'une deuxième valeur limite (GW) et/ou ne présente aucun changement de signe.

11. Procédé selon l'une des revendications précédentes, **caractérisé en ce que** les résultats de calcul sur une première échelle de temps plus lente concernant le fonctionnement stationnaire et les résultats de calcul sur une deuxième échelle de temps plus rapide concernant le fonctionnement transitoire sont mis en relation entre eux, plus particulièrement pour la détection d'un fonctionnement stationnaire et/ou d'un fonctionnement transitoire.

12. Procédé selon l'une des revendications précédentes, **caractérisé en ce que**, dans le cas d'un fonctionnement stationnaire du moteur à combustion interne, les coefficients d'une équation de débit en fonction du temps sont mis à l'échelle au moyen d'une comparaison des résultats de calcul concernant une première échelle de temps plus lente sur la base d'un procédé de remplissage et de vidange d'une part et des résultats de calcul concernant une deuxième échelle de temps plus rapide sur la base d'une équation de débit d'autre part.

13. Procédé selon l'une des revendications précédentes, **caractérisé en ce que**, au papillon de moteur (DK) correspond un premier champ caractéristique de papillon et/ou au papillon de dérivation du compresseur (VDBK) correspond un deuxième champ caractéristique de papillon, dans lequel
- le premier et/ou le deuxième champ caractéristique de papillon indique respectivement un débit massique quasi stationnaire
- dans une première dépendance d'une pression et/ou selon le papillon et/ou
- dans une deuxième dépendance d'une position du papillon.

14. Dispositif de régulation pour un moteur à combustion interne (100), plus particulièrement un moteur à combustion interne à gaz qui comprend :
- une portion d'aspiration (30) et un moteur (10) avec un nombre de cylindres (Ai, Bi) et un récepteur (80) disposé en amont avant les cylindres (Ai, Bi), dans lequel
la portion d'aspiration (30) comprend :
- une charge avec un compresseur (51) et une dérivation pour le contournement de la charge et dans lequel
- au récepteur (80) correspond un papillon de moteur (DK) et à la dérivation correspond un papillon de dérivation de compresseur (VBP) ; et dans lequel
- au moyen du dispositif de régulation, une position du papillon de moteur (DK) et/ou du papillon de dérivation du compresseur (VDBK) peut être réglée pour le contrôle d'un fluide de charge, plus particulièrement d'une part de mélange du mélange gaz-air, en fonction du fonctionnement,
**caractérisé en ce que**
- dans le dispositif de régulation, à la portion d'aspiration (30) correspond un modèle de portion d'aspiration au moyen duquel au moins un débit massique de mélange et/ou un état de mélange de la part de mélange avant le moteur (10) est déterminé sur la première échelle de temps plus lente et sur la deuxième échelle de temps plus rapide et, sur la base d'un résultat de détermination,
- au moyen de la régulation, le papillon de dérivation du compresseur (VDBK) est réglé dans une dépendance du papillon de moteur (DK).

15. Dispositif de régulation selon la revendication 14, **caractérisé en ce que** le dispositif de régulation est en outre conçu :
- pour déterminer le débit massique du mélange et/ou l'état de mélange de la part de mélange en temps réel et/ou simultanément et
- pour faire en sorte que le papillon de dérivation du compresseur (VDBK) soit réglé dans une dépendance du papillon de moteur (DK) au choix sur la base d'une des échelles de temps.

16. Moteur à combustion interne (100), plus particulièrement comme un moteur à combustion interne à gaz, qui comprend :
- une portion d'aspiration (30) et un moteur (10) avec un nombre de cylindres (Ai, Bi) et un récepteur (80) disposé en amont avant les cylindres (Ai, Bi), dans lequel
la portion d'aspiration (30) comprend :
- une charge avec un compresseur (51) et une dérivation pour le contournement de la charge, dans lequel
- au récepteur (80) correspond un papillon de moteur (DK) et à la dérivation correspond un papillon de dérivation de compresseur (VBP) ; et
- un dispositif de régulation selon la revendication 14 ou 15.

17. Moteur à combustion interne (100) selon la revendication 16, **caractérisé en ce que**
- le moteur à combustion interne est conçu sous la forme d'un moteur à combustion interne à gaz (100), plus particulièrement sous la forme d'un moteur à combustion interne à gaz (100) avec un mélangeur de gaz (40) ; et/ou
- le moteur à combustion interne est conçu sous la forme d'un moteur à combustion interne à double carburant (100), plus particulièrement sous la forme d'un moteur à combustion interne à double carburant (100) avec un système d'injection pour un carburant liquide.
